# EUROPEAN PATENT SPECIFICATION

(11) **EP 4 258 605 B1**
(45) Date of publication and mention of the grant of the patent: **07.10.2026**
(21) Application number: 22166905.4
(22) Date of filing: 06.04.2022
(51) Int. Cl.: H04L 25/02

(54) **AMBIGUITY RESOLUTION OF MULTIPATH COMPONENT PARAMETERS**
MEHRDEUTIGKEITSAUFLÖSUNG VON MEHRPFADKOMPONENTENPARAMETERN
RÉSOLUTION D'AMBIGUÏTÉ DE PARAMÈTRES DE COMPOSANTS À TRAJETS MULTIPLES

(43) Date of publication of application: 11.10.2023
(73) Proprietor: Nokia Technologies Oy, 02610 Espoo (FI)
(72) Inventor: Zirwas, Wolfgang, 81249 Munich (DE); Vilas Boas, Brenda, 85579 Neubiberg (DE)
(74) Representative: Cohausz & Florack

(56) References cited:
- EP-A1- 2 429 138
- WO-A1-2004/028020
- US-A1- 2016 043 883

## Description

### FIELD

The following disclosure relates to the field of wireless networks, or more particularly relates to systems, apparatuses, and methods for identifying a set of multipath propagation parameters enabling a resolving the ambiguity of multipath component parameters.

### BACKGROUND

In a complex environment radio signals exhibit multipath propagation due to e.g. reflection from water bodies and terrestrial objects such as mountains and buildings. The radio signal in this way reaching a receiver by different paths, each path giving rise to a multipath component (MPC) having parameters of amplitude, phase, and delay time. A radio channel, referring to the medium, e.g. the different paths, a signal can travel from a transmitter to a receiver, in this way features multipath propagation changing the characteristics of the signal from transmitter to receiver. Knowledge about the MPC may be utilized to enhance applications such as positioning accuracy or CSI reporting, in particular with respect to low time delay MPC.

US 2016/0043883 A1 discloses channel estimation where at least two sets of multipath components for a reception range are formed by applying spatial filtering to reference signal information measured by a communication device. Each set of multipath components comprises a number of multipath components that is less than the number of multipath components for the range. Separate parameter estimations are performed on the at least two sets of multipath components. The communication device may be a mobile device, and measurements may be provided by the mobile device in multiple of locations.

EP 2 429 138 A1 discloses a method for the joint estimation of a multipath wireless channel and of the number of specular propagation paths present in the channel in a wireless transmission system with at least one transmitter and at least one receiver, with both the transmitter and the receiver being equipped with multiple sensing elements, the method comprising the steps of: a) Transmitting a training/probing sequence; b) Receiving and sampling the sequence; c) Defining L potential signal components, parameterized with a set of parameters including a sparsity parameter that parameterizes a prior probability density function (pdf) for the multipath component; d) Jointly estimating the pdfs of all multipath component parameters and sparsity parameters from c) by defining auxiliary (latent) variables for the subset of parameters of a single component assuming the parameters of the other components fixed, and updating the pdfs of the component parameters using the estimated admissible hidden data; e) Evaluating developed pruning conditions to decide whether a component is removed or kept; f) Repeating d) and e) for all L components, and repeating the iterations anew until a set convergence criterion is complied with; g) Feeding the channel components and their parameters to further processing.

WO 2004/028020 A1 discloses that the delays, associated with multipath components of a signal transmitted on a dedicated channel, are estimated by estimating the delays associated with multipath components of a signal transmitted on a common channel, determining which of the multipath components of the signal transmitted on the common channel correspond to multipath components of the signal transmitted on the dedicated channel, and using the relevant estimated delays as estimates of the delays associated with the respective corresponding multipath components of the signal transmitted on the dedicated channel.

### SUMMARY OF SOME EXEMPLARY EMBODIMENTS

Accuracy of applications such as positioning or channel reporting could benefit from better knowledge of the multipath components, e.g. an accuracy of positioning in the centimetre range may be achievable. However, MPC parameters, in particular in the case of a high number of MPC, can be ambiguous, i.e. for a given error signal the same channel impulse profile may be reconstructed by a multitude of multipath component parameter sets, represented by at least one of e.g. τi, αi or φi parameters.

Especially challenging is the reception of a signal having multipath components with a relative delay below half of a single time domain tap, where such a tap delay may be limited by the measurement bandwidth (e.g., RF BW = 100MHz → tap delay = 1/100e6 = 10 ns). Time delay measurements based on reference signals (RS) like positioning RS (PRS) or channel state information (CSI) RS suffer in this case due to the convolution of the IFFT operation for the frequency- to time domain transformation.

Even for a very low error signal power there may exist a high number of possible multipath component parameter combinations, i.e., there exist a full ambiguity subspace of parameter combinations τᵢ, αᵢ and/or φᵢ, which would be consistent with the received signal or in particular the estimated profiled channel impulse response.

Such an ambiguity subspace results in a theoretical limit for identifying the correct multipath component parameter set out of the large dimensional ambiguity subspace. For a given error signal bound like a certain Signal-to-interference-plus-noise ratio (SINR) floor for the profiled channel impulse response, related Fisher information for distinguishing different multipath component parameters from the ambiguity subspace will be zero. As a result, there is a theoretical bound for identifying the correct multipath component parameter set for sets of such multipath components. In particular for accurate positioning it poses a fundamental performance limit assuming a given radio frequency (RF) bandwidth as well as a given receive SINR, as e.g. for a 40 MHz bandwidth a delay uncertainty of half a tap may be about 16 ns, which is then the equivalent to a position inaccuracy of about 4.8 meter.

For convenience, a list of abbreviations used in the following is already given at this point:
- 3GPP: 3rd Generation Partnership Project
- 5G: Fifth generation
- 5GC: 5G Core
- 6G: Sixth generation
- AI: Artificial Intelligence
- AoA: Angle of Arrival
- AoD: Azimuth of Departure
- BVDM: Building Vector Data Matrix
- CN: Core Network
- CSI: Channel State Information
- CIR: Channel Impulse Response
- CTF: Channel Transfer Function
- CV: Computer Vision
- DCI: Downlink Control Indicator
- DL: Downlink
- DNN: Deep Neural Networks
- FDD: Frequency Division Duplex
- GAN: Generative Adversarial Networks
- GCS: Global Coordinate System
- gNB: Next Generation Node B/5G NR Node B
- HP: Hard Priority
- IFFT: Inverse Fast Fourier Transformation
- JCAS: Joint Communication And Sensing
- KPI: Key Performance Indicator
- LCS: Local Coordinate System
- LMF: Location Management Function
- LSTM: Long Short Term Memory
- MAC: Medium Access Control (Layer)
- MAC CE: MAC Control Element
- ML: Machine Learning
- MPC: Multi Path Component
- MSE: Mean Squared Error
- MSO:: ML-split orchestrator
- NN: Neural Network
- NWDAF: Network Data Analytics Function
- NR: New Radio
- NRPPa: NR Positioning Protocol A
- OFDM: Orthogonal Frequency Division Multiplexing
- PHY: Physical (Layer)
- PoC: Proof of Concept
- PRS: Positioning Reference Signal
- QoS: Quality of Service
- Radar: Radio detection and ranging
- RAN: Radio Access Network
- RT: Ray Tracing
- RF: Radio Frequency
- RRC: Radio Resource Control
- SDAP: Service Data Adaptation Protocol
- SNR: Signal to Noise Ratio
- TA: Tracking Area
- ToA: Time of Arrival
- TRP: Transmission Reception Point
- UE: User Equipment
- UL: Uplink
- UNN: Untrained Neural Networks
- ZoD: Zenith of Departure

According to a first exemplary aspect, an apparatus is disclosed with the features as defined in the claims.

For example, identifying at least a part of a first subspace of a plurality of sets of possible multipath components consistent with the first signal as an identified first subspace; and/or downselecting the identified first subspace based on the at least one additional information into a (first) downselected subspace.

The means of the apparatus can be implemented in hardware and/or software. They may comprise for instance at least one processor for executing computer program code for performing the required functions, at least one memory storing the program code, or both. Alternatively, they could comprise for instance circuitry that is designed or configured to implement the required functions, for instance implemented in a chipset or a chip, like an integrated circuit. In general, the means may comprise for instance one or more processing means or processors. The apparatus may for instance be or comprise a server, server cloud, a gNB, and/or a mobile entity (e.g., a mobile telecommunication device or a mobile phone or a user equipment).

As used in this application, the term "circuitry" may refer to one or more or all of the following:
(a) hardware-only circuit implementations (such as implementations in e.g. analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise only the disclosed components, for instance means, processor, memory, or may further comprise one or more additional components.

According to a second exemplary aspect, a method is disclosed with the features as defined in the claims.

The method may comprise the steps the apparatus of the first exemplary aspect is configured to perform or has means for. The method may for instance be performed and/or controlled by an/the apparatus, for instance a server, a server cloud, a gNB, and/or a mobile entity (e.g., a mobile telecommunication device or a mobile phone or a user equipment).

Alternatively, this method may be performed and/or controlled by more than one apparatus, for instance a server cloud comprising at least two servers or a system of apparatus, e.g. a system comprising at least one gNB and at least one UE. For instance, the method may be performed and/or controlled by using at least one processor of an/the apparatus.

According to a third exemplary aspect, a system not falling with the scope of the invention is disclosed, the system comprising a mobile entity or a part thereof and a server or a part thereof together performing the method according to the second exemplary aspect, or a method comprising:
- Obtaining a measurement on a first signal on a first radio channel, wherein the first radio channel exhibits multipath propagation resulting in a set of multipath components;
- Identifying at least a part of a first subspace of all sets of possible multipath components consistent with the first signal;
- Obtaining at least one additional information associated with the identified subspace;
- Downselecting the identified subspace based on the at least one additional information; and
- Optionally identifying an estimation of the set of multipath components from the downselected subspace.

The system may comprise one or more apparatus, such as the apparatus of the first exemplary aspect, and/or a server, server cloud, a gNB, a UE, and/or a mobile terminal (e.g., a mobile telecommunication device or a mobile phone).

According to a fourth exemplary aspect, a computer program is disclosed with the features as defined in the claims.

According to a further exemplary aspect, an apparatus is disclosed, configured to perform and/or control or comprising respective means for performing and/or controlling the method according to the second exemplary aspect.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise only the disclosed components, for instance means, processor, memory, or may further comprise one or more additional components.

According to a further exemplary aspect, a computer program is disclosed, the computer program when executed by a processor causing an apparatus, for instance a server, to perform and/or control the actions of the method according to the second exemplary aspect.

According to a further exemplary aspect, a computer readable storage medium is disclosed, the computer readable storage medium comprising a computer program product according to the fourth exemplary aspect.

Any disclosure herein relating to any exemplary aspect is to be understood to be equally disclosed with respect to any subject-matter according to the respective exemplary aspect, e.g. relating to an apparatus, a method, a computer program, and a computer-readable medium. Thus, for instance, the disclosure of a method step shall also be considered as a disclosure of means for performing and/or configured to perform the respective method step. Likewise, the disclosure of means for performing and/or configured to perform a method step shall also be considered as a disclosure of the method step itself. The same holds for any passage describing at least one processor; and at least one memory including computer program code; the at least one memory and the computer program code configured to, with the at least one processor, cause an apparatus at least to perform a step.

In the following, exemplary features and exemplary embodiments of all aspects will be described in further detail.

According to all disclosed exemplary aspects, a measurement of a first signal may be obtained by receiving e.g. from a further apparatus, or by accessing of the measurement, and/or e.g. by a receiving the signal and performing the measurement or receiving the measurement from another apparatus. The obtained measurement of a first signal may be transformed into a profiled CIR. From the profiled CIR the first subspace may be obtained or derived, e.g. by a profiling method or by AI/ML algorithms. The measurement may be performed in a frequency domain and may then be transformed into time domain by a IFFT. For a IFFT (operation) at least one (e.g. each) multipath component (e.g. as a dirac-function) may be convoluted by a sinc function and these sinc functions may e.g. lead then to a constructive or destructive superposition at (certain) time delay taps. Therefore, the MPC may be directly unobservable, the time domain taps may, however, not have the mean power of the MPCs. It may, hence, enable to observe MPC in the time domain that have low power in the frequency domain.

Multipath propagation may be represented by a set of multipath components, e.g. the multipath propagation may result or effect the occurrence of MPC. A multipath component is to be understood as the set of parameters describing the multipath component (in particular delay time, amplitude, phase, AoA, polarization and/or AoD); a set of multipath components is to be understood as a collection of a plurality (e.g. at least two) of MPC e.g. associated with the signal or resulting in the measured signal.

The set of multipath components can e.g. comprise or be limited to one or more multipath components with a (relative) delay below a single time delay tap (i.e. time domain tap) or half of a single time delay tap, wherein the time delay tap may e.g. be the inverse of the radio frequency of the first radio channel (e.g., RF BW = 100MHz time delay tap = 1/100e6 = 10 ns). A first and/or second radio channel may comprise two to five or more multipath components. However, within a time delay below a single time delay tap or half of a single time delay tap, (e.g. only) two to five multipath components around the strongest multipath component may be present, e.g. around the line-of-sight (LoS) MPC. The set of multipath components can e.g. be limited to the 1, 2, 3, 4, or 5 multipath components in a (symmetrical) interval around the strongest multipath component (e.g. the MPC associated with the highest received signal strength or the MPC associated with the highest power in the time domain), e.g. around a time delay at which the highest signal strength of the first signal is received or around a time delay were an MPC is associated with the highest power in the time domain, for instance the highest power (e.g. maximum) of the time-domain transformed measurement (e.g. via IFFT), when the measurement was performed in the frequency domain. The number of multipath components (N), e.g. within half a time delay tap (e.g. 1, 2, 3, 4, or 5 multipath components), may be inferred or obtained using or based on a model order selection neural network, e.g. prior to identifying the at least a part of the first subspace. For example, the apparatus of the first aspect may be configured to and/or comprise means for obtaining and/or inferring a number of multipath components. For example, the method of the second aspect may comprise obtaining and/or inferring a number of multipath components.

The subspace is e.g. formed by a (e.g. high or certain) number of possible multipath component parameter combinations, e.g. τi, αi and φi, which may be consistent with the received signal or in particular the estimated profiled channel impulse response, i.e. the received first signal may be reconstructed on an ambiguous set of possible multipath component parameter combinations. A profiled channel impulse response may be normalized to one, in which case, the amplitude values can then be chosen to be in a range of a = (0,2], due to destructive superposition of multipath components. The time delays may be chosen to be in the range of τ = (-1, 1) Δt, where Δt is the time interval between consecutive time delay taps in seconds (e.g., RF BW = 100MHz time delay tap = 1/100e6 = 10 ns = Δt). For instance, the subspace may comprise (e.g. only) quantized MPC parameter values. For example, the subspace may e.g. be formed by a (e.g. countable) number of possible multipath component parameter combinations, wherein at least for one (e.g. each) possible multipath component parameter, the multipath component parameter values are spaced by a (predetermined) distance from each other, e.g. the first parameter value for α may be chosen as 0, the next value for α may be 0 + Δα, and the next then may be 0 + 2Δα, wherein Δα is a predetermined distance in α (e.g. an equidistant spacing between the MPC parameter values considered in the subspace), in such a way e.g. a coarse or fine (quantified) grid may be defined for the MPC parameter values. The spacing between MPC parameter values may also be non-equidistant, e.g. it may be finer (e.g. by a factor of ten) near a maximum of a CIR.

The subspace of a plurality of sets of possible multipath components may be consistent with the first signal. The subspace of a plurality of sets of possible multipath components may be a subspace of (e.g. all) sets of (possible) multipath components consistent with the first signal. A set of (possible) multipath components may be understood to be consistent with a (e.g. first or second) signal, if the set of multipath components results in the measured signal (e.g. the measured signal is (about) identical to a (generated) signal derived from the set of multipath components (e.g. via calculation/simulation)) or in a (generated) signal close to the (measured) signal with respect to a distance measure such as the normalized mean square error, e.g. with a NMSE below -10 or -20 dB. For example, the subspace of a plurality of sets of (possible) multipath components may comprise (e.g. only) multipath components that may result in the measured signal or in a signal close to the (measured) signal with respect to a distance measure such as the normalized mean square error, e.g. with a NMSE below -10 or -20 dB. The term "possible" may be understood to emphasise (i.e. clarify) that in this case the subspace features (e.g. all) combinations of MPC (e.g. MPC parameter triplets (τi, αi and φi,)) that may be considered consistent with the first signal. The term "possible" may, hence, be omitted. The ambiguity subspace is in this case the set of (e.g. all) possible multipath component parameter combinations for the N multipath components comprising the radio channel.

A measurement of a first signal on a first radio channel may e.g. be a channel sounder measurement for instance for a mobile radio cell. As an example, a discrete pulse signal, e.g. a direct pulse, may be send on the radio channel and the measurement can be the received signal on that channel resulting or caused by the discrete pulse signal.

Obtaining at least one additional information may be a receiving of the additional information, e.g. from a further apparatus, such as a database, and/or an accessing or retrieving e.g. when the additional information is already stored on an apparatus.

The additional information associated with the identified first subspace, may e.g. yield additional information related to the subspace enabling the downselecting of the first subspace via the additional information. For instance, it may be information correlated with the identified first subspace. The additional information may in particular comprise more or other information, e.g. on the first subspace, than derivable from or comprised by the measurement of the first signal.

The additional information associated with the identified first subspace can, for example, comprise information based on a measurement of at least one second signal on a second radio channel or on the first radio channel at a different time than the first signal. For example, from a measurement of at least one second signal on a second radio channel at least a part of a second subspace can be identified. The second subspace may e.g. be correlated to the first subspace, when, e.g., the first and second radio channel share at least a portion of multipath components, e.g. by being located in a similar or same general environment and/or by being send from the same transmitter.

The first channel may be an UL and the second may be a DL channel or vice versa. The first and/or second channel may also be RF frequency bands of two or more component carriers, e.g. in a case of carrier aggregation, wherein e.g. the component carriers can have a bandwidth of 1.4, 3, 5, 10,15, 20 or 400 MHz, or more and a maximum of five component carriers can be aggregated. The first and/or second channel may also be RF frequency bands like (from) 2 GHz, 3.5. GHz or (from) 28 GHz, or in the Terahertz range. The second channel may e.g. be an FR 1 frequency band.

The additional information can, for example, comprise information based on the radio channel of the DL, when the first subspace had been identified for the uplink, e.g. for FDD systems, or vice versa. In this case at least the part of a first subspace may be identified for a first channel e.g. for the UL and at least a part of a second subspace may be identified for a second channel e.g. for the DL, as additional information. The downselecting of the identified first subspace based on the at least one additional information may then identify a multipath component subset, e.g. UL as well as DL. A best match may be identified based on a distance measure such as normalized mean square error (NMSE) being below or above a threshold value, e.g. a NMSE below -10 dB or -20dB.

For instance, the apparatus, e.g. a gNB, may obtain a measurement of a first signal on the UL and a measurement of a second signal on the DL, e.g. as or in CSI. The DL channel measurement may e.g. be obtained from a UE, e.g. via a respective provided CSI report, and the UL channel measurement may be estimated from SRS. The apparatus can than identify, e.g. infer, the first and second subspace, e.g. of the UL as well as from the DL frequency bands, e.g. independently. For example both subspaces may esteem from the same underlying radio channel, so that both subspaces may contain at least one common element, e.g. fitting to both UL and DL CSI. This additional information may then be associated with both the first and the second subspace and may enable the downselecting.

Combining measurements on two channels, e.g. the UL and DL bands of an FDD system may improve the parameter accuracy in particular for use cases such as channel prediction and/or positioning intending sub-wavelength accuracy.

Additionally or alternatively the measurement of a first signal and the measurement of a second signal may be combined, e.g. the combined channel transfer function for the first and second channel, e.g. UL and DL, may be derived. The downselecting of the identified first subspace based on the at least one additional information may then identify a multipath component subset, e.g. UL as well as DL. Again, a best match may be identified based on a distance measure such as normalized mean square error (NMSE) relative to the measured UL and DL radio channels (based e.g. on CSI RS and/or SRS) being below or above a threshold value, e.g. a NMSE below -10 dB or -20dB.

The additional information can, for example, comprise information on a relation between a first radio channel and a second radio channel.

For instance, in case the first radio channel is a UL channel in e.g. CSI, the additional information may enable the recreation of a measurement of a second signal on the second radio channel, e.g. based on the relation between UL and DL channel. The additional information may comprise information on a delay specific extra phase slope per MPC, which can be added to MPC derived from the first signal on the first channel. Such a phase slope may be determined (e.g. calculated) from the frequency gap defining the relative change of the wavelength per subcarrier. The downselecting may then comprise an estimation of the MPC parameters, which have the smallest estimation error or normalized mean square error (NMSE) between inferred and estimated CSI of the DL channel.

Using a combination of the measurements of the first signal and the second signal, e.g. a combined channel transfer function, may avoid overhead for identifying at least a part of a second subspace of a plurality of sets of possible multipath components consistent with the second signal, e.g. it may avoid overhead for identifying the subspace at least for one FDD band.

The additional information associated with the identified first subspace can, for example, comprise time domain evolutions.

The downselecting may comprise comparing the time domain channel evaluations of at least two MPC subsets within the plurality of sets of possible multipath components consistent with the first signal. For example, a UE (e.g. apparatus according to the first aspect) may obtain a measurement of a first signal on a first radio channel and at least a measurement of a second signal on the first radio channel at a different time, e.g. by observing the channel evolution over at least two time steps, in particular the UE may have changed its location in between the measurement of the first and the second signal. The UE may then estimate the potential time evolution of the MPC parameters for each MPC component subset within the plurality of sets of possible multipath components consistent with the first signal. A MPC subset not consistent with the (real) set of MPC may then be identifiable by a non-linear time evolution of the MPC parameters due to the superposition of multiple MPCs into one of the inferred MPCs. For example, in case a MPC subset is consistent with the (real) set of MPC, e.g. the MPC subset is correct, the delay and phase values may evolve linearly over time and the amplitude may be constant. However, e.g. in case a MPC subset is not consistent with the (real) set of MPC the amplitude may vary similar as known for the superposition of two MPCs, i.e. the MPC subset may be identified as incorrect or wrong. The downselecting may, hence, comprise estimating a time evolution of the MPC parameters for at least two (e.g. for each) MPC component subset within the plurality of sets of possible multipath components consistent with the first signal, and/or identifying MPC subsets not consistent with the (real) set of multipath components at least partially based on an/the estimation of a time evolution of the MPC parameters for at least two (e.g. for each) MPC component subset within the plurality of sets of possible multipath components consistent with the first signal. Utilizing the time evolution may allow to identify (over time) incorrect subsets of the ambiguity subspace eventually leading to the real MPC set.

If additional information associated with the identified first subspace can, for example, comprise spatial domain information, e.g. information on a digital twin and/or information on the geography and/or a building vector data matrix.

The downselecting may comprise, obtaining a spatial domain solution, e.g. inferring the MPC at least partially based on information on the environment, e.g. calculating MPCs at least partially based on this information. The downselecting may comprise, identifying multipath component subsets within the plurality of sets of possible multipath components not consistent, e.g. contradicting, an obtained spatial domain solution. The downselecting may comprise identifying not consistent (e.g. prohibitive) solutions with respect to parameters such as delay time, phase, amplitude, AoA, polarization and/or AoD.

If the downselected subspace comprises (e.g. only) one set of multipath components, this set of multipath components may be identified as the estimation of the set of multipath components from the downselected subspace, i.e. the downselected subspace may e.g. consist of (e.g. only) one set of multipath components and/or the (one) set of multipath components is the estimation of the set of multipath components from the downselected subspace. In e.g. such a case, identifying an estimation of the set of multipath components may (e.g. only) comprise identifying the (e.g. only) one set of multipath components in the downselected subspace as the estimation of the set of multipath components.

Identifying an estimation of the set of multipath components may comprise determining (e.g. calculating) at least one cost function, e.g. a Normalized Mean Square Error (NMSE), between a representative of the measurement of the first signal, e.g. a channel impulse response, and a corresponding representative of a reconstruction of the first signal, e.g. a (generated, e.g. modelled or simulated) channel impulse response, wherein the reconstruction is e.g. generated/modelled based on a set of multipath components from the first and/or the downselected subspace. For example, identifying an estimation of the set of multipath components may be based at least on a NMSE below - 10 dB and/or -20dB. Identifying an estimation of the set of multipath components may comprise determining (e.g. calculating) more than one cost function, wherein a plurality of (e.g. each) cost function between the representative of the measurement of the first signal and a corresponding representative of a reconstruction of the first signal, wherein the reconstruction is e.g. modelled based on one of the set of multipath components from the first and/or the downselected subspace and wherein at least two (e.g. each) of the plurality of cost functions is based on a different set of multipath components from the first and/or the downselected subspace. For example, the identifying of an estimation of the set of multipath components may comprise obtaining a reconstruction (associated with a certain set of multipath components from the first and/or the downselected subspace) of the first signal for each set of multipath components of a plurality of sets of multipath components from the first and/or the downselected subspace and further, collecting the obtained reconstructions (e.g. each) associated with a certain set of multipath components from the first and/or the downselected subspace in a plurality of reconstructions of the first signal; and/or calculating a cost function (associated with a certain set of multipath components from the first and/or the downselected subspace) for at least two (e.g. each) pairs of the representative of the measurement of the first signal and a corresponding representative of a reconstruction (associated with a certain set of multipath components from the first and/or the downselected subspace) of the first signal from a plurality of reconstructions of the first signal and collecting the obtained cost functions in a plurality of cost functions; and/or identifying a cost function having the lowest or highest value (e.g. minimum or maximum) in a plurality of cost functions, the estimation of the set of multipath components being the set of multipath components associated with the identified cost function.

Identifying an estimation of the set of multipath components from the downselected subspace may e.g. be performed by a (at least one) further step (e.g. as an iteration) of downselecting, e.g. after obtaining a further additional information associated with the identified and/or downselected subspace. The further additional information may be of any kind described for the additional information. Alternatively or in addition, a profiling method and/or an AI/ML algorithms may be used for identifying an estimation of the set of multipath components from the downselected subspace. The identifying of an estimation of the set of multipath components from the downselected subspace may e.g. comprise using a threshold based estimation of the delay of the first LOS multipath component. The identifying of an estimation of the set of multipath components from the downselected subspace may e.g. comprise (at least one step of further) downselecting the identified and/or downselected subspace based on at least one further additional information. The at least one step of further downselecting may be e.g. performed in consecutive order e.g. iteratively, e.g. the identifying an estimation of the set of multipath components may comprise further steps of downselecting until e.g. the further downselected subspace (e.g. only) comprises or consists of (e.g. only) one set of multipath components. Identifying an estimation of the set of multipath components from the downselected subspace and/or the (e.g. further) downselecting may e.g. comprise a phase optimization.

Instead of or additionally to the identifying of an estimation of the set of multipath components from the downselected subspace, the apparatus according to the first exemplary aspect may be configured to perform and/or control and/or comprising means for transmitting or reporting the downselected first subspace, e.g. to a further apparatus that may for instance identify an estimation of the set of multipath components from the downselected subspace. The method according to the second exemplary aspect may likewise comprise transmitting or reporting the downselected first subspace, e.g. to a further apparatus.

The disclosed exemplary aspects may allow for a reduction of the first subspace, providing an accurate estimation of the real MPC parameters, especially in a case of relatively small delay differences between the multipath components of e.g. less than half a time delay tap. This may enable significant performance gains and may enhance accuracy in applications such as positioning, e.g. single cell based positioning or multi cell positioning, or channel reporting. An improved MPC parameter estimation accuracy can be directly transferred into corresponding position accuracy gains, and/or, an increased channel prediction horizon. Further, the estimation of the set of multipath components from the downselected subspace may enable to establish (e.g. partial or full) reciprocity between UL and DL channels. This may enable the possibility to track the radio channel in one band (e.g. UL) to infer the small scale evolution of the CSI in the other radio band (e.g., DL). This may enable avoiding the reference signal and reporting overhead from one of the two bands, at least for some time intervals.

According to an exemplary embodiment of all exemplary aspects, the apparatus further comprising means for or the method further comprises:
Estimating a channel evolution of the first channel at least partially based on the estimation of the set of multipath components, in particular for CSI channel prediction.

According to an exemplary embodiment of all exemplary aspects, the apparatus further comprising means for or the method further comprises:
- Estimating a position of the apparatus or a further apparatus at least partially based on the estimation of the set of multipath components.

The apparatus may e.g. be a server or a gNB and the further apparatus may e.g. be an electronic device, e.g. a mobile terminal (e.g. a UE). It may be a UE of a cellular network (also referred to as mobile communication network), for instance a 3G, LTE/4G, 5G NR, 5G or 6G network or other future communication standard. Further, it may be a mobile device, e.g. a handset, a smartphone, a tablet, a laptop, or any other mobile device. In various embodiments, it may be a vehicle for travelling in air, water, or on land, e.g. a plane or a drone, a ship or a car or a truck. It may also be a robot, a sensor device, a wearable device, an Internet of Things (IoT) device, a Machine Type Communication (TC) device, or the likes. Herewith and in the following, the term UE is used for such disclosed example apparatuses of the first exemplary aspect.

According to an exemplary embodiment of all exemplary aspects, the apparatus further comprising means for or the method further comprises positioning the apparatus or a further apparatus, e.g. single cell based positioning or multi cell positioning.

According to an exemplary embodiment of the all exemplary aspects, the apparatus further comprising means for or the method further comprises:
- Receiving at least one measurement of at least one second signal on a second radio channel or on the first radio channel at a different time than the first signal,
   wherein the at least one second signal exhibits multipath propagation at least partially associated with the set of multipath components, and
   wherein the at least one additional information is based on the at least one measurement of the at least one second signal.

The at least one second signal may exhibit multipath propagation at least partially associated, e.g. correlated, with the set of multipath components. For example, the at least one second signal exhibits multipath propagation represented by the set of multipath components, i.e. the same set of MPC.

The at least one additional information may be based on the at least one measurement of the at least one second signal, e.g. by identifying at least a part of a second subspace of a plurality of sets of possible multipath components consistent with the second signal or by combining a first and a second channel transfer function derived from the respective measurements of the first and the second signal to identify a multipath component from the estimation of the set of multipath components minimizing the normalized mean square error.

According to an exemplary embodiment of all exemplary aspects, the apparatus further comprising means for or the method further comprises:
- Selecting a multipath component from the estimation of the set of multipath components having the highest signal strength (e.g. highest or maximum power in the time domain and/or frequency domain) of all multipath components in the estimation of the set of multipath components;
- Estimating a position of the apparatus at least partially based on the selected multipath component.

The selected multipath component having the highest signal strength of all multipath components in the estimation of the set of multipath components may e.g. be the line-of-sight (LOS) MPC.

According to an exemplary embodiment of all exemplary aspects, the apparatus further comprising means for or the method further comprises:
- Determining a time domain channel evolution of a first subset of the sets of possible multipath components and a time domain channel evolution of a second subset of the sets of possible multipath components,
   wherein the downselecting comprises comparing the determined time domain channel evolutions.

According to an exemplary embodiment of all exemplary aspects, the downselecting comprises identifying at least one set of possible multipath components of the at least the part of the subspace at least partially based on a spatial domain solution.

According to an exemplary embodiment of all exemplary aspect, the apparatus further comprising means for or the method further comprises:
- Identifying an estimation of an uncertainty of the set of multipath components based on the at least the part of the subspace;
- Skipping the step of downselecting if the estimation of the uncertainty is below a threshold value.

Identifying an estimation of an uncertainty of the set of multipath components based on the at least the part of the subspace may e.g. be performed (e.g. only) for the multipath component from (e.g. each of) the sets of possible multipath components having the highest signal strength (e.g. received signal strength) of all multipath components in the set of possible multipath components, which may correspond to the estimated LOS MPC. The uncertainty may e.g. be a time delay uncertainty or an uncertainty related to time variations.

Skipping the downselectiing or some iterations of the downselecting (downselection) in certain cases, e.g. when the identified first subspace may already be sufficiently small (depending e.g. on the accuracy requirements of the application), may enable computing power savings. For instance, for positioning the time delay may be considered particularly relevant and in a case where the uncertainty of the time delay parameter of the MPC is relatively small, i.e. the subspace is small with regard to the time delay, the downselecting step or one or more iterations comprised by the downselecting step may be skipped allowing for a faster computation.

According to an exemplary embodiment of all exemplary aspects, the identifying the at least the part of the subspace is at least partially based on at least one of:
- an artificial intelligence and/or machine learning method;
- a profiling method.

An artificial intelligence and/or machine learning method may e.g. be an artificial intelligence and/or machine learning method enabling image recognition or reconstruction, in particular a neural network.

A profiling method may comprise deriving a multitude of (e.g. all) possible parameter combinations of MPCs that are consistent (e.g. may result in) the measured signal, e.g. in form of a profiled channel impulse response (CIR_{prof}). The profiling method may comprise defining a parameter-grid (e.g. time delay (τ) - amplitude (α)) over a profiled channel impulse response, which may cover at least some or all possible multipath component (MPC) combinations. The method may be performed sequentially, starting from possible (e.g. quantized or grid) values for a first parameter, e.g. time delay, and identifying possible values for a second parameter, e.g. amplitude. This may be performed for every relevant parameter of an MPC sequentially, e.g. by a nested loop, so that a plurality of (e.g. all) sets of possible multipath components consistent with the first signal may be identified. In this way the first (and/or second) subspace may be identified. A profiling method may enable identification of time delay taps associated with high received power. Downselecting may enable to infer MPC parameters for a (directly unobservable) strongest MPC (i.e. strongest MPC relative to the remaining MPC with regard to received signal power).

The profiling method may comprise calculating an artificial channel impulse response (CIRₐᵣₜ) based on at least one MPC parameter (e.g. time delay or amplitude) for at least two (e.g. each) of the plurality of sets of possible multipath components consistent with the first signal. The profiling method may comprise determining (e.g. calculating) the difference (CIR_{diff}) between a profiled channel impulse response CIR_{prof} of size C^{Nt x1} - with Nt as the number of time domain taps - and the artificially generated profiled channel impulse response for at least two (e.g. each) MPC from the plurality of (e.g. all) sets of possible multipath components consistent with the first signal. This may enable to identify additional MPC parameters (e.g. phase), that were e.g. not identified by utilizing a parameter-grid.

The identifying of the at least the part of the subspace may comprise determining (e.g. calculating) the power for at least two (e.g. each) of the identified plurality of sets of possible multipath components consistent with the first signal. The downselecting may comprise excluding sets of possible multipath components from the plurality of sets of possible multipath components based on the power calculated from CIR_{diff} for a set of possible multipath components being e.g. above a threshold, e.g. the threshold may be 0.5 dB above the minimum power calculated from CIR_{diff} for at least two of the identified plurality of sets of possible multipath components, to name but one non-limiting example.

The profiling method may be implemented on an apparatus, e.g. an apparatus comprising at least one processor and at least one memory, such as the apparatus of the first exemplary aspect. The method may be implemented in software and may be parallelized, in that e.g. at least two cores of at least one processor or of different processors calculate the method steps in parallel. The profiling method may utilize pre-stored functions such as delay specific SI-functions ( SI(x) = sin(x)/x ). This may enable complexity savings.

For example, in a first step of a profiling method a τ-α-grid over the profiled channel impulse response CIR_{prof} is generated so that at least two (e.g. all) possible multipath component (MPC) combinations are covered by the grid of points. Then, sequentially one of the grid points for the first MPC is selected, e.g. by starting in the first left and bottom point of the grid. Then, a second grid point for a second MPC (again starting from the left bottom point) is selected and so on for every further MPC. In the case of three MPC, in this way via two nested loops all possible triplets (i.e. three MPC) for the predefined grid of points are identified. For a respective triplet, a profiled channel impulse response may be calculated by generating an artificial channel impulse response CIRₐᵣₜ. Then the difference CIR_{diff} between the profiled channel impulse response CIR_{prof}(:) of size C^{Nt x1} - with Nt as the number of time domain taps - and the artificially generated profiled channel impulse response for each MPC triplet with index i = 1...I may be calculated as: ${CIR}_{diff} \left(:,i\right) = \left.\left({CIR}_{prof}\left(:\right)-{CIR}_{art}\left(:,i\right)\right)\right| φ_opt ;$

In this example, the grid defining the MPC triplets covers (e.g. only) the parameters delay time and amplitude and not the phases of the multipath components. Therefore, the condition "|_{φ_opt}" may be applied, which means that the phase of the first MPC is fixed and the phases of second and third MPC are varied over all possible quantized phase combinations. The estimation of the (real) phase may then be based on the mean power Pₘₑₐₙ(φ₂, φ₃) of CIR_{diff} being minimized (which may be considered an example of a phase optimization): $\left\{{φ}_{2 , opt}, {φ}_{3 , opt}\right\} = argmin \left\{mean\left(abs{\left[{CIR}_{diff}\left(:,{φ}_{2},{φ}_{3}\right)\right]}^{2}\right)\right\} ;$

Here, φ₂ and φ₃ are the quantized phases of the second and third MPC and φ_{2,opt}, φ_{3,opt} are then the optimum quantized phases, which result for this set of delay and phase values in the minimum power Pₘₑₐₙ(φ₂, φ₃) for CIR_{diff}. The phase quantization level may, for example, have a value of Δφ = 10 degrees.

Then CIR_{diff}(:,i) may be stored for all (e.g. possible) MPC triplets as well as the related MPC parameters together with the average power Pₘₑₐₙ(i), which is now the power under the assumption that the optimal phases φ_{2,opt} and φ_{3,opt} are applied: ${P}_{mean} \left(i\right) = mean \left(abs{\left[{CIR}_{diff}\left(:,i\right)\right]}^{2}\right) ;$

Note that the first dimension of CIR_{diff}(:,:) of size C^{Nt x1} is for example the time domain delay values of the profiled channel impulses so that we get the mean power of the difference signal.

After all the number of possible I triplets of MPCs have been calculated then one may use the power Pₘₑₐₙ(*i*) to identify those MPC triplets with a Pₘₑₐₙ(*i*) close to the minimum power Pₘᵢₙ = min(Pₘₑₐₙ(*i*)). This set of MPC triplets may be defined by setting a small power threshold of, for example, P_{TH} = 0.5 dB: $\left\{{i}_{ambiguity}\right\} = \left\{\left.{P}_{mean}\left(i\right)\right|{P}_{mean}\left(i\right)<{P}_{min}+{P}_{TH}\right\} ;$

Further, the set of IDs {*i*_{ambiguity}} may define a (ambiguity) subspace and may be used to identify the related MPC parameters from the stored triplets related to these IDs i.

An artificial intelligence and/or machine learning method may enable a reduced complexity. Such a method may be a DNN, which may include some convolutional network layers, or a conditional generative adversial network (cGAN).

For example, a (D)NN may be trained using (offline) data sets of profiled channel impulse responses and the corresponding subspaces. For the training the subspaces may be identified by a profiling method. The (D)NN may be trained by a supervised training, where during training different profiled channel impulse responses are entered and the (D)NN is trained to output the corresponding subspace, e.g. in form of a set of indices, e.g. I_{ambiguity} MPC triplets. The cost function for training may e.g. be the difference of the inferred ambiguity triplets versus that found by the profiling method, which may be minimized. During inference phase the (D)NN infers the subspace (e.g. set of MPC triplets parameters) (directly) from the profiled channel impulse responses. The (D)NN may enable to infer a (first and/or second) subspace (e.g. MPC triplet parameters) based on (profiled) CIR as input.

The cost function 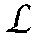 may be the direct inference of the MPC triplets: $L = mean \left[{\left({τ}_{1} {α}_{1}-τ{′}_{1} α{′}_{1}\right)}^{2}, {\left({τ}_{2} {α}_{2}-τ{′}_{2} α{′}_{2}\right)}^{2}, {\left({τ}_{3} {α}_{3}-τ{′}_{3} α{′}_{3}\right)}^{2}\right] ,$ where (τᵢ αᵢ - τ'ᵢ α'ᵢ)² is the Euclidian distance between the true and the inferred MPC parameter points delay τᵢ and amplitude αᵢ.

As another example, a (c)GAN may be used to identify the subspace. In this case a profiled channel impulse may be used as a label, which is used to steer the inference of the subspace in the (c)GAN. GANs can be used for image generation. A subspace may be represented by an image, e.g. MPC triplets may define triangles, MPC quartets may define tetragons, MPC quintets may define pentagons. The cost function may be to recreate the same or similar set of images, e.g. triangles, for a given CIR. (Offline) data sets of profiled channel impulse responses and the corresponding subspaces may be utilized for training.

For cGANs a min, max optimization may be used, where the discriminator probability to identify a 'fake' image is maximized and simultaneously the probability for the generator network G is maximized to generate images which will pass the discriminator network D: ${min}_{G} {max}_{D} {E}_{x} \left(log\left(D\left(x\right)\right)\right) + {E}_{x} \left(1-log\left(D\left(G\left(x\right)\right)\right)\right)$

In this case, the generator network G may generate images of the subspace, e.g. triangles for a given profiled channel impulse responses (the condition or label) and the discriminator network D may identify images from G deviating from the expected outcome for the given profiled channel impulse response. So, eventually the generator network G learns to directly infer from the profiled channel impulse response the image of triangles. The inferred triangle images may indicate all the relevant generally possible MPC parameter triplets.

When an image, e.g. a triangle or pentagon, is identified a further method may be implied for identifying the values at the corners of the respective polygon. A computer vision (CV) method may for instance be used, which is e.g. trained to infer polygons and their corner points. Alternately, the image may be analysed based on the pixel values, e.g. the image may be representable by a matrix of white (='0') and black points (= '1'), so that the corner points may be identified by an evaluation of black points in the columns. E.g. starting without loss of generality from the left, first columns having (e.g. only) zeros may be found. The first column having an occurrence of a non-zero value may then be considered to include the first corner point. The lines connecting this point to the next corner points may then be followed through the columns, so that at least some or all corner points may be identified. This method may be repeated for further (e.g. all) polygons. Therefore, the polygons may be considered one at a time, e.g. by removing an identified polygon from the image after all its corner points were identified.

Different colours or drawing styles (e.g. width of the lines or full versus dotted lines) may be used to encode MPC parameters in the images, e.g. by drawing different polygons in different colours depending on e.g. the amplitude or phase. This may enable a simplification of the remapping of the images to MPC parameters.

According to an exemplary embodiment of all exemplary aspects, the at least one additional information comprises information on at least one marker subtap region enabling downselecting the identified subspace. A marker subtap region can be understood as a known region with a markant change in the multipath components, e.g. a marker subtap region may be a street crossing or (a position of) a (traffic) sign, wherein the location and the change in the MPC parameters of the street crossing is known, e.g. from a database. A markant change may be a change by at least 1% in at least one MPC parameter. For instance, the additional information may comprise information that a relative position of a traffic sign, when monitored, changes by at least 1 cm, when an apparatus moved by a certain position. For example information on a marker subtap region may indicate a (e.g. fast) increase or decrease of a (particular) MPC at a certain geographic location or in a certain geographic area, e.g. a street crossing. An increase or decrease of an MPC at geographic location may e.g. indicate the presence of a (certain, e.g. known from a database) building (e.g. due to a (known) radio shadow). This may enable highly reliable positioning, e.g. single cell based positioning or multi cell positioning.

According to an exemplary embodiment of all exemplary aspects, the at least the part of the first subspace is limited to the N multipath components of the sets of possible multipath components consistent with the first signal received within half a time delay tap around a time delay at which the highest signal strength of the first signal is received. N may be e.g. 1, 2, 3, 4, or 5.

According to an exemplary embodiment of all exemplary aspects, the apparatus further comprises means for or the method further comprises:
- Estimating the time evolution of the first signal at least partially based on the estimation of the set of multipath components.

According to an exemplary embodiment of all exemplary aspects, the apparatus further comprises means for or the method further comprises positioning an apparatus (e.g. the apparatus of the first exemplary aspect), e.g. the positioning comprising single cell based positioning and/or multi cell positioning.

According to an exemplary embodiment of all exemplary aspects, the apparatus further comprises means for or the method further comprises:
- Estimating a position of the apparatus or a further apparatus at least partially based on the estimation of the set of multipath components.

The features and example embodiments described above may equally pertain to the different aspects.

It is to be understood that the presentation in this section is merely by way of examples and non-limiting.

Other features will become apparent from the following detailed description considered in conjunction with the accompanying drawings. It is to be understood, however, that the drawings are designed solely for purposes of illustration and not as a definition of the limits, for which reference should be made to the appended claims. It should be further understood that the drawings are not drawn to scale and that they are merely intended to conceptually illustrate the structures and procedures described herein.

### BRIEF DESCRIPTION OF THE DRAWINGS

The figures show:
- Fig. 1: a schematic of an exemplary system according to an exemplary aspect;
- Fig. 2: a graph illustrating an exemplary measurement of MPC in relation to time delay taps;
- Fig. 3: a flowchart showing an example embodiment of a method according to the second exemplary aspect;
- Fig. 4: a graph illustrating simulation results for a measured 200 MHz radio channel;
- Fig. 5: a graph illustrating an exemplary profiled channel impulse response for full RF bandwidth of 200 MHz and UL and DL with only a 40 MHz RF bandwidth;
- Fig. 6a: a graph illustrating an exemplary subspace for 3 MPC;
- Fig. 6b: a graph illustrating another exemplary subspace for 3 MPC;
- Fig. 7: a graph illustrating an exemplary subspace for 3 MPC;
- Fig. 8: a graph illustrating an exemplary absolute (abs) of a channel transfer function;
- Fig. 9: a graph illustrating an exemplary subspace in CTF frequency domain;
- Fig. 10: a graph illustrating exemplary NMSE over phase variations;
- Fig. 11a: a graph illustrating exemplary NMSE for an exemplary measured versus an exemplary estimated CTF;
- Fig. 11b: a graph illustrating an exemplary difference between a measured versus an exemplary estimated CTF;
- Fig. 12: an exemplary profiled channel impulse response for 40 MHz signal;
- Fig. 13: a zoomed view of Fig. 12;
- Fig. 14: a flowchart showing an example embodiment of a method according to the second exemplary aspect and/or an example embodiment of a system according to the third aspect;
- Fig. 15: a graph illustrating an exemplary profiling method using a τ-α grid over an exemplary profiled channel impulse response;
- Fig. 16: a graph illustrating a fine grid relatively to a first identified coarse grid;
- Fig. 17: a graph illustrating an exemplary outcome of identifying a first subspace;
- Fig. 18: a graph illustrating an exemplary shape of a profiled channel impulse response;
- Fig. 19: a schematic diagram illustrating exemplary utilization of a DNN for identifying a first or second subspace
- Fig. 20: a schematic diagram illustrating an exemplary GAN structure;
- Fig. 21: a schematic diagram illustrating an exemplary cGAN structure;
- Fig. 22: a schematic diagram illustrating training and identifying a first or second subspace (e.g. inference of an ambiguity subspace) based on a cGAN configuration;
- Fig. 23: a schematic diagram illustrating an exemplary impact of estimation errors of MPC parameter estimation;
- Fig. 24: a flowchart showing an example embodiment of a method according to the second exemplary aspect and/or an example embodiment of a system according to the third aspect;
- Fig. 25: a flowchart showing an example embodiment of a method according to the second exemplary aspect and/or an example embodiment of a system according to the third aspect;
- Fig. 26: a flowchart showing an example embodiment of an apparatus according to the first aspect and/or an example embodiment of a method according to the second exemplary aspect and/or an example embodiment of a system according to the third aspect;
- Fig. 27: a flowchart showing an example embodiment of a method according to the second exemplary aspect and/or an example embodiment of a system according to the third aspect;
- Fig. 28: a table showing an exemplary description of an exemplary NN for estimating MPC parameters;
- Fig. 29: a flowchart showing an example embodiment of an apparatus according to the first aspect and/or an example embodiment of a method according to the second exemplary aspect and/or an example embodiment of a system according to the third aspect;
- Fig. 30: an illustration of an exemplary blurred image of the exemplary subspace for 3 MPC from Fig. 6b;
- Fig. 31: a schematic block diagram of an example embodiment of an apparatus according to the first aspect and/or an example embodiment of an apparatus configured to perform the method according to the second exemplary aspect.

### DETAILED DESCRIPTION OF SOME EXEMPLARY EMBODIMENTS

The following description serves to deepen the understanding and shall be understood to complement and be read together with the description as provided in the above summary section of this specification. Some aspects may have a different terminology than e.g. provided in the description above. The skilled person will nevertheless understand that those terms refer to the same subject-matter, e.g. by being more specific. For instance, downselecting may be referred to as downselection; identifying at least a part of a first subspace of a plurality of sets of possible multipath components consistent with the first signal may also be referred to as inferring the first subspace or inferring an ambiguity subspace or similar expressions; Identifying an estimation of the set of multipath components from the downselected subspace may also be referred to as inferring the correct MPC or similar expressions; A time delay tap may also be referred to as a time domain tap or tap delay or simply tap or similar expressions; A delay time may also be referred to simply as a delay; first and second subspace may also be referred to as a (first or second) ambiguity subspace or simply an ambiguity subspace or subspace or similar expressions; identifying an estimation may also be described as selecting the best fitting multipath components or similar expressions; an estimation of the of the set of multipath components from the downselected subspace may also be referred to as a selected best multipath component or similar expressions; the term finetuning (in the context of MPC) may refer to a further (e.g. a second) step of downselecting/downselection.

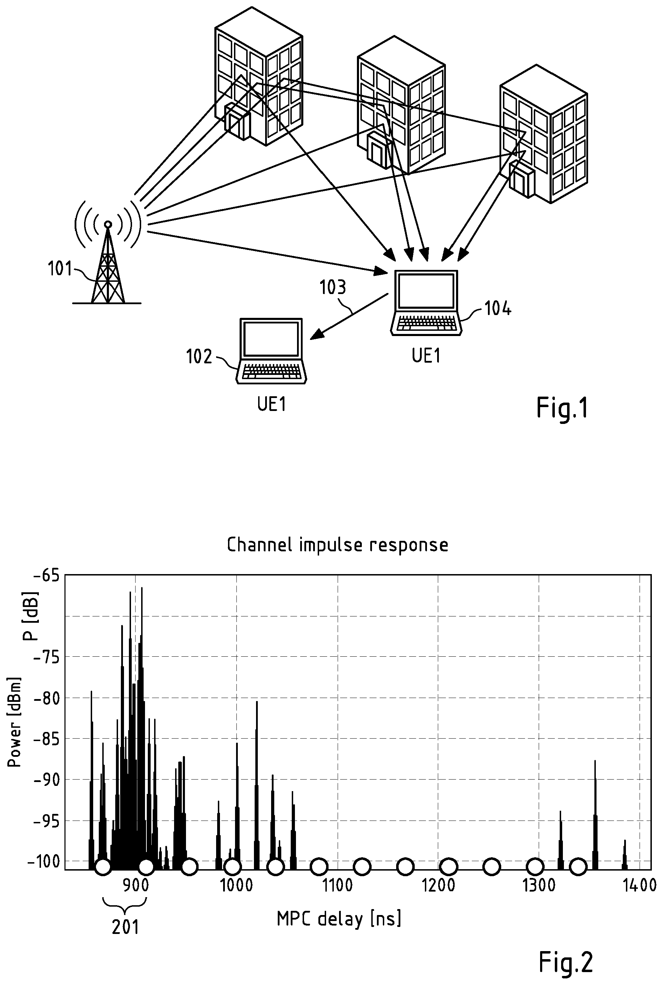

Fig. 1 is a schematic of an exemplary system according to an exemplary aspect comprising a gNB 101 and an UE 102. A signal transmitted by the gNB reaches the UE on several paths, i.e. the radio channel on which the signal is transmitted exhibits multipath propagation. As a result of e.g. reflections at buildings the signal reaches the UE not only on the direct line-of-sight (LoS) path, but also on several other paths. However, the paths may have different length and, hence, are received by the UE with different time delays - and not on the direct path, thus non line-of-sight (NLoS). A respective (e.g. each) received component of the signal, i.e. the LoS and any further multipath component, may contribute to a (e.g. simulated) channel impulse response as depicted in Fig. 2 (which may be derived via a ray-tracing simulation for e.g. an NLoS location), wherein on the x-Axis the time delay taps 201 are depicted as open circles (the depicted tap delay 201 of 33ns is for a 20 MHz RF bandwidth and covers a plurality of multipath components within one tap delay). If the measurement is performed in the frequency domain and transformed into the time domain, e.g. by an IFFT, so that each multipath component as a dirac is convoluted by a sinc function, constructive or destructive superposition at the tap delay time instances is introduced. Therefore, a MPC may not be directly observable. The taps, however, may not have the mean power of the MPC. The measurement may, hence, result in an ambiguity subspace for the MPC and in particular for the parameters of these MPCs.

For example, the CSI evolution may be dependent on a UE movement 103 and/or MPC parameters like relative delays, AoA, or a combination thereof may be estimated 104 using a building vector map.

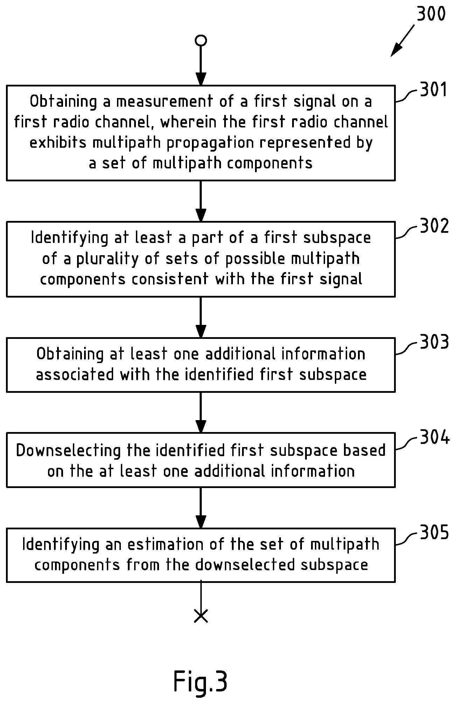

Fig. 3 is a flowchart showing an example embodiment of a method according to the second exemplary aspect. This flowchart 300 may for instance be performed by at least one of the apparatuses 101, 102. Additionally or alternatively, flowchart 300 may be performed by a system comprising more than one apparatus, e.g. together by a gNB 101 and a UE 102.

The set of multipath components can e.g. comprise or be limited to multipath components with a (e.g. relative) delay below a single time delay tap (i.e. time domain tap) or half of a single time delay tap, wherein the time delay tap may e.g. be the inverse of the radio frequency of the first radio channel (e.g., RF BW = 100MHz time delay tap = 1/100e6 = 10 ns). A first and/or second radio channel may comprise two to five or more multipath components. However, within a time delay below a single time delay tap or half of a single time delay tap (e.g. only) two to five multipath components around the strongest multipath component may be present, e.g. around the LoS MPC. The set of multipath components can e.g. be limited to the 1, 2, 3, 4, or 5 multipath components in a (symmetrical) interval around the strongest multipath component (e.g. the MPC associated with the highest power in the time domain), e.g. around a time delay at which the highest signal strength of the first signal is received. The number of multipath components (N),e.g. within half a time delay tap (e.g. 1, 2, 3, 4, or 5 multipath components), may be inferred or obtained using or based on a model order selection neural network, e.g. prior to identifying the at least a part of the first subspace.

In a first step 301, a measurement of a first signal on a first radio channel is obtained, wherein the first radio channel exhibits multipath propagation represented by a set of multipath components. The measurement is e.g. a sounder measurement. Obtaining a measurement of a first signal may be a receiving e.g. from a further apparatus, or an accessing of the measurement, and/or e.g. a receiving the signal and performing the measurement or receiving the measurement from another apparatus. The obtained measurement of a first signal may be transformed into a profiled CIR. The profiled CIR may be normalized to one. The range of the amplitudes may be limited to α = (0,1], but the case of destructive superposition of multipath components may be included also taking larger amplitude values into account, e.g. α = (0,2]. The delay range may be limited to the sub half tap delay range. The CIR may however also be affected by the left and right taps so that the delay range (relative to the signal peak) may be τ = (-1,1) Δt, where Δt is the tap delay in seconds. From the profiled CIR, the first subspace may be determined or derived, e.g. by a profiling method or by AI/ML algorithms.

In a second step 302, at least a part of a first subspace of a plurality of sets of possible multipath components consistent with the first signal is identified.

The subspace is e.g. formed by a (e.g. high) number of possible multipath component parameter combinations, e.g. τi, αi and φi, which are consistent with the received signal or in particular the estimated profiled channel impulse response, i.e. the received first signal may be reconstructed on an ambiguous set of possible multipath component parameter combinations. A profiled CIR may be normalized to one, in which case, the amplitude values can then be selected (e.g. chosen) to be in a range of α = (0,2], due to destructive superposition of multipath components. The time delays may be chosen to be in the range of τ = (-1,1) Δt, where Δt is the time interval between consecutive time delay taps in seconds (e.g., RF BW = 100MHz time delay tap = 1/100e⁶ = 10 ns = Δt).

The subspace of a plurality of sets of possible multipath components consistent with the first signal may be a subspace of all sets of possible multipath components consistent with the first signal. In this case the subspace features all combinations of MPC (e.g. MPC parameter triplets (τi, αi and φi,)) that may result in the measured signal or in a signal close to the signal with respect to a distance measure such as the normalized mean square error. The ambiguity subspace is in this case the set of all possible multipath component parameter combinations for the N multipath components comprising the radio channel.

In a third step 303, at least one additional information associated with the identified first subspace is obtained.

Obtaining at least one additional information may be a receiving additional information, e.g. from a further apparatus, such as a database, or an accessing e.g. when the additional information is already stored on an apparatus.

The additional information associated with the identified first subspace, may e.g. yield additional information related to the subspace enabling a downselection of the first subspace via the additional information, e.g. it may be information correlated with the identified first subspace. The additional information may in particular comprise more or other information, e.g. on the first subspace, than derivable from the measurement of the first signal.

The additional information associated with the identified first subspace can, for example, comprise information based on a measurement of at least one second signal on a second radio channel or on the first radio channel at a different time than the first signal. For example, from a measurement of at least one second signal on a second radio channel at least a part of a second subspace can be identified. The second subspace may e.g. be correlated to the first subspace, when, e.g., the first and second radio channel share at least a portion of multipath components, e.g. by being located in a similar or same general environment and/or by being send from the same transmitter.

The first channel may be an UL and the second may be a DL channel or vice versa. The first and/or second channel may also be represented by RF frequency bands of two or more component carriers. For instance, in a case of carrier aggregation, wherein e.g. the component carriers can have a bandwidth of e.g. 1.4, 3, 5, 10, 15 or 20 MHz and optionally e.g. a maximum of five component carriers can be aggregated. The first and/or second channel may also be RF frequency bands like (from) 2 GHz, 3.5. GHz or (from) 28 GHz.

The additional information can, for example, comprise information based on the radio channel of the downlink, when the first subspace had been identified for the uplink, e.g. for FDD systems, or vice versa. In this case the at least a part of a first subspace may be identified for a first channel e.g. for the UL and at least a part of a second subspace may be identified for a second channel e.g. for the DL, as additional information. The downselecting of the identified first subspace based on the at least one additional information may then identify a multipath component subset, e.g. UL as well as DL. A best match may be identified based on a distance measure such as NMSE being below or above a threshold value.

For instance, an apparatus, e.g. a gNB 101 of the first exemplary aspect, may obtain a measurement of a first signal on the UL and a measurement of a second signal on the DL, e.g. as CSI. The DL channel measurement may e.g. be obtained from a UE 102, e.g. via CSI report, and the UL channel measurement may be estimated from SRS. The apparatus can then identify, e.g. infer, the first and second subspace, e.g. of the UL as well as from the DL frequency bands, independently. For example both subspaces may esteem from the same underlying radio channel, so that both subspaces contain at least one common element, e.g. fitting to both UL and DL CSI. This additional information would then be associated with both the first and the second subspace and may enable a downselecting.

MPCs may be considered (e.g. approximately) the same for the UL and DL channel (e.g. for reasonable low interband guard bands), so that the MPC reflections behave the same from a physical layer point of view in both bands. Due to the different frequency and, hence, wavelength of the UL and DL channel MPCs received at the same time delay may, however, have a different phase parameter, which may cause different constructive or destructive superposition of the MPCs in the UL compared to the DL channel.

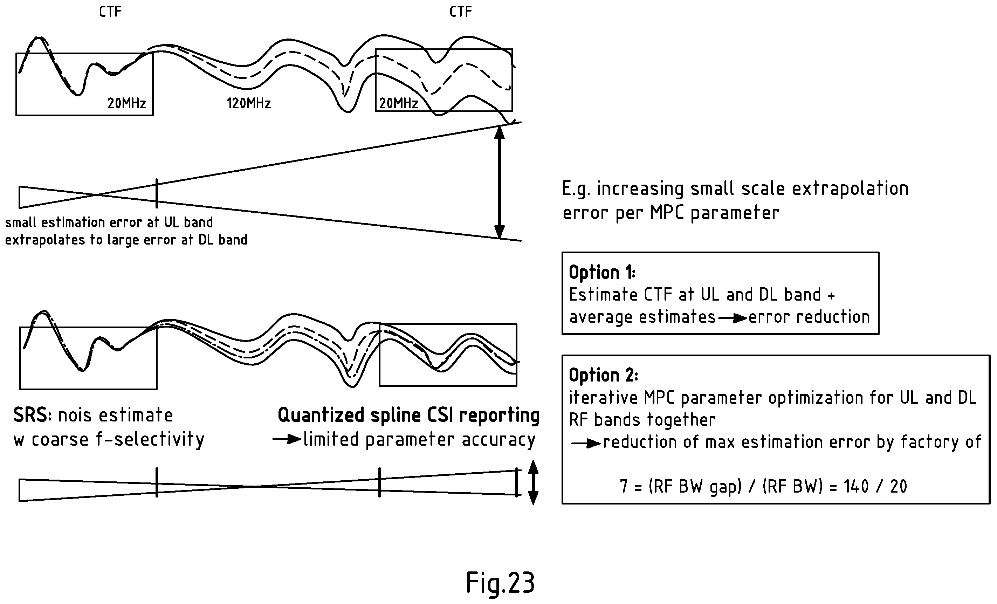

Due to the different wavelengths at the UL and DL band, there may e.g. be for the same delay for a MPC a different relative phase shift, which may lead to different constructive and destructive superposition of the MPCs at DL and UL band. Especially, for a large duplex band gap the sensitivity to MPC parameters not matching the real world parameters may be large, which is illustrated in Figure 23. Fig. 23 is an illustration of strong impact of small estimation errors of MPC parameter estimation, when estimating at the UL frequency band the CSI for the DL frequency band. This high sensitivity, which may increase for larger frequency duplex gaps may allow to clearly differentiate the CSI from different MPC triplets of the ambiguity subspace.

Combining measurements on two channels, e.g. the UL and DL bands of an FDD system may improve the parameter accuracy in particular for use cases like channel prediction and/or positioning intending sub-wavelength accuracy.

E.g. for the case that a gNB knows the UL as well as the DL CSI, the DL channel is reported by a UE and the UL channel estimated from SRS. Then in a first option, the gNB may infer the ambiguity subspace of the UL as well as from the DL frequency subbands independently. As both subspaces may esteem from the same underlying radio channel, both ambiguity subspaces may contain one element fitting to both UL and DL CSI. In this case, e.g. a comparison and mapping operation may suffice. This may be a combining for FDD the ambiguity subspaces from UL and DL band.

Additionally or alternatively, the measurement of a first signal and the measurement of a second signal may be combined, e.g. the combined channel transfer function for the first and second channel, e.g. UL and DL, may be determined (derived). The downselecting of the identified (at least part of a) first subspace based on the at least one additional information may then identify a multipath component subset, e.g. UL as well as DL. A best match may be identified based on a distance measure or calculation such as NMSE e.g. relative to the measured UL and DL radio channels (based e.g. on CSI RS and/or SRS) being below or above a certain predefined threshold value.

For example, for downselecting, the ambiguity subspace of one frequency band may be used, for example, from the UL band and for a respective (e.g. each) entry of the ambiguity subspace (i.e. for each set of MPC in the subspace) the related DL CSI may be recreated, e.g. by adding a delay specific extra phase slope per MPC. This phase slope may be calculated from the frequency gap defining the relative change of the wavelength per subcarrier. The downselection process may then be to estimate the MPC parameters, which have the smallest estimation error, or, NMSE between inferred and estimated CSI of the DL band. This may be considered as a downselecting for FDD the ambiguity subspaces from UL with minimum NMSE at DL band.

Instead of using the two FDD frequency bands from UL and DL combining the RF-frequency bands of two or more component carriers, or, of different RF bands like from 2 GHz, 3.5. GHz and in extreme cases even from 28 GHz may be used.

The additional information can, for example, comprise information on a relation between a first radio channel and a second radio channel. The first channel may be an UL and the second may be a DL channel or vice versa. The first and/or second channel may also be RF frequency bands of two or more component carriers, e.g. in a case of carrier aggregation, wherein e.g. the component carriers can have a bandwidth of 1.4, 3, 5, 10, 15 or 20 MHz and e.g. a maximum of five component carriers can be aggregated. The first and/or second channel may also be RF frequency bands like (from) 2 GHz, 3.5. GHz or (from) 28 GHz.

For instance, in case the first radio channel is a UL channel in e.g. CSI, the additional information may enable the recreation of a measurement of a second signal on the second radio channel, e.g. based on the relation between UL and DL channel. The additional information may comprise information on a delay specific extra phase slope per MPC, which can be added to MPC derived from the first signal on the first channel. Such a phase slope may be determined (e.g. calculated) from a/the frequency gap representing the relative change of the wavelength per subcarrier. The downselection may comprise an estimation of the MPC parameters, which have the smallest estimation error or NMSE between inferred and estimated CSI of the DL channel.

Using a combination of the measurements of the first signal and the second signal, e.g. a combined channel transfer function, may avoid overhead for identifying at least a part of a second subspace of a plurality of sets of possible multipath components consistent with the second signal, e.g. it may avoid overhead for identifying the subspace at least for one FDD band.

The additional information associated with the identified first subspace can, for example, comprise time domain evolutions.

In a fourth step 304, the identified first subspace based on the at least one additional information is downselected.

The downselecting may comprise comparing the time domain channel evaluations of at least two MPC subsets within the plurality of sets of possible multipath components consistent with the first signal. For example, a UE obtains a measurement of a first signal on a first radio channel and at least a measurement of a second signal on the first radio channel at a different time, e.g. by observing the channel evolution over at least two time steps, in particular the UE may have changed its location in between the measurement of the first and the second signal. The UE may then estimate the potential time evolution of the MPC parameters for a respective (e.g. each) MPC component subset within the plurality of sets of possible multipath components consistent with the first signal. A MPC subset not consistent with the (e.g. real) set of MPC may then be identifiable by a non-linear time evolution of the MPC parameters due to the superposition of multiple MPCs into one of the inferred MPCs. The downselecting may, hence, comprise estimating a time evolution of the MPC parameters for at least two (e.g. for each) MPC component subset within the plurality of sets of possible multipath components consistent with the first signal, and/or identifying MPC subsets not consistent with the (real) set of multipath components at least partially based on an/the estimation of a time evolution of the MPC parameters for at least two (e.g. for each) MPC component subset within the plurality of sets of possible multipath components consistent with the first signal. Utilizing the time evolution may allow to identify (e.g. over time) incorrect subsets of the ambiguity subspace eventually leading to the real MPC set.

For the downselecting, a comparison to the time domain channel evolutions for different multipath component subsets may be used. In this case, for example, a UE (e.g. apparatus according to the first exemplary aspect) observes the channel evolution over multiple time steps and estimates for each MPC component subset of the ambiguity subspace the potential evolution of the parameters. In case of a wrong MPC subset there will be non-linear evolution of the MPC parameters due to the superposition of multiple MPCs into one of the inferred MPCs. This may allow to identify over time incorrect subset of the ambiguity subspace eventually leading to one single (best estimate or correct) MPC set.

The additional information associated with the identified first subspace can, for example, comprise spatial domain information, e.g. information on a digital twin and/or information on the geography and/or a building vector data matrix.

The downselecting may comprise, obtaining a spatial domain solution, e.g. inferring the MPC at least partially based on information on the environment, e.g. calculating MPCs at least partially based on this information. The downselecting may comprise, identifying multipath component subsets within the plurality of sets of possible multipath components not consistent, e.g. contradicting, an obtained spatial domain solution. The downselecting may comprise identifying not consistent (e.g. prohibitive) solutions with respect to parameters delay time and AoA.

For example, spatial domain solutions may identify contradicting multipath component subsets and thereby reduce the number of possible options, this may include parameter such as AoA of the MPCs.

If the downselected subspace comprises (e.g. only) one set of multipath components, this set of multipath components may be identified as the estimation of the set of multipath components from the downselected subspace, i.e. the downselected subspace may e.g. consist of only one set of multipath components and/or the (single) set of multipath components is the estimation of the set of multipath components from the downselected subspace.

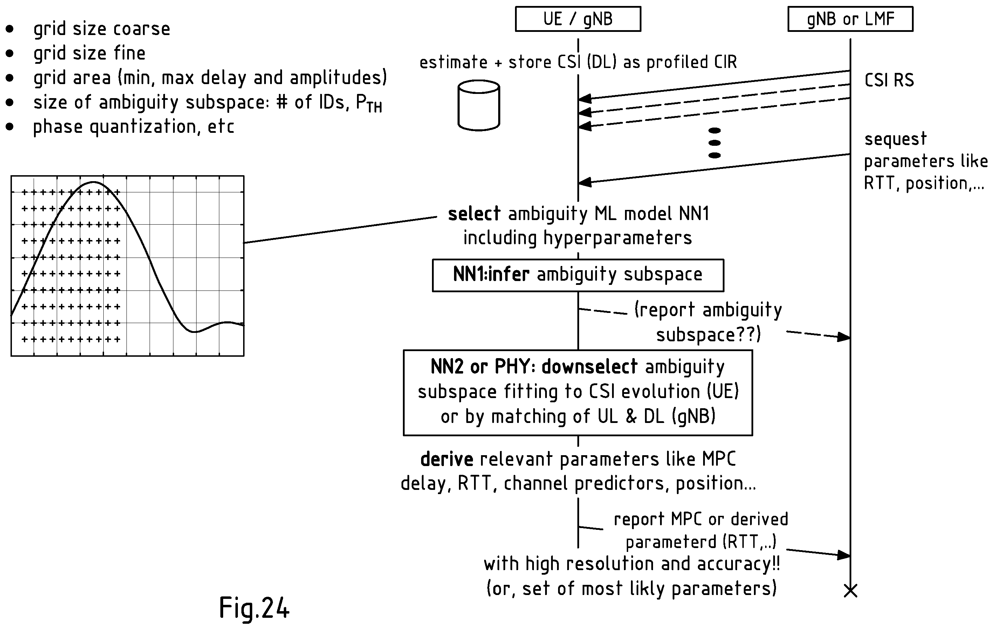

Exemplary embodiments of the exemplary system comprising a UE and a gNB, together configured to perform an exemplary embodiment of the method are depicted in Fig. 24, 25, 26, 27, and 29

In a fifth (optional) step 305, an estimation of the set of multipath components from the downselected subspace is identified.

Identifying an estimation of the set of multipath components may comprise determining (e.g. calculating) at least one cost function, e.g. an NMSE, between a representative of the measurement of the first signal, e.g. a CIR, and a corresponding representative of a reconstruction of the first signal, e.g. a (modelled or simulated) CIR, wherein the reconstruction is e.g. modelled based on a set of multipath components from the first and/or the downselected subspace. Identifying an estimation of the set of multipath components may comprise calculating more than one cost function, wherein a plurality of (e.g. each) cost function between the representative of the measurement of the first signal and a corresponding representative of a reconstruction of the first signal, wherein the reconstruction is e.g. modelled based on one of the set of multipath components from the first and/or the downselected subspace and wherein at least two (e.g each) of the plurality of cost functions is based on a different set of multipath components from the first and/or the downselected subspace. For example, the identifying of an estimation of the set of multipath components may comprise obtaining a reconstruction (e.g. associated with a certain set of multipath components from the first and/or the downselected subspace) of the first signal for a respective set of multipath components of a plurality of sets of multipath components from the first and/or the downselected subspace and collecting the obtained reconstructions each associated with a certain set of multipath components from the first and/or the downselected subspace in a plurality of reconstructions of the first signal; and/or calculating a cost function (associated with a certain set of multipath components from the first and/or the downselected subspace) for at least two (e.g. each) pairs of the representative of the measurement of the first signal and a corresponding representative of a reconstruction (e.g. associated with a certain set of multipath components from the first and/or the downselected subspace) of the first signal from a plurality of reconstructions of the first signal and collecting the obtained cost functions in a plurality of cost functions; and/or identifying a cost function having the lowest or highest value in a plurality of cost functions, the estimation of the set of multipath components being the set of multipath components associated with the identified cost function.

Identifying an estimation of the set of multipath components from the downselected subspace may e.g. be performed by a (at least one) further step of downselecting, e.g. after obtaining a further additional information associated with the identified and/or downselected subspace. The further additional information may be of any kind described for the additional information. Alternatively or in addition, a profiling method and/or an AI/ML algorithms may be used for identifying an estimation of the set of multipath components from the downselected subspace. The identifying an estimation of the set of multipath components from the downselected subspace may e.g. comprise using a threshold based estimation of the delay of the first LoS multipath component. The identifying of an estimation of the set of multipath components from the downselected subspace may e.g. comprise (at least one step of further) downselecting the identified and/or downselected subspace based on at least one further additional information. The at least one step of such a further downselecting may be e.g. performed in consecutive order e.g. iteratively, e.g. the identifying an estimation of the set of multipath components may comprise further steps of downselecting until e.g. the further downselected subspace only comprises or consists of (e.g. only) one set of multipath components.

Instead of or additionally to the identifying an estimation of the set of multipath components from the downselected subspace the apparatus according to the first exemplary aspect may be configured to perform and/or control and/or comprising means for transmitting or reporting the downselected first subspace, e.g. to a further apparatus that may for instance identify an estimation of the set of multipath components from the downselected subspace. The method according to the second exemplary aspect may likewise comprise transmitting or reporting the downselected first subspace, e.g. to a further apparatus.

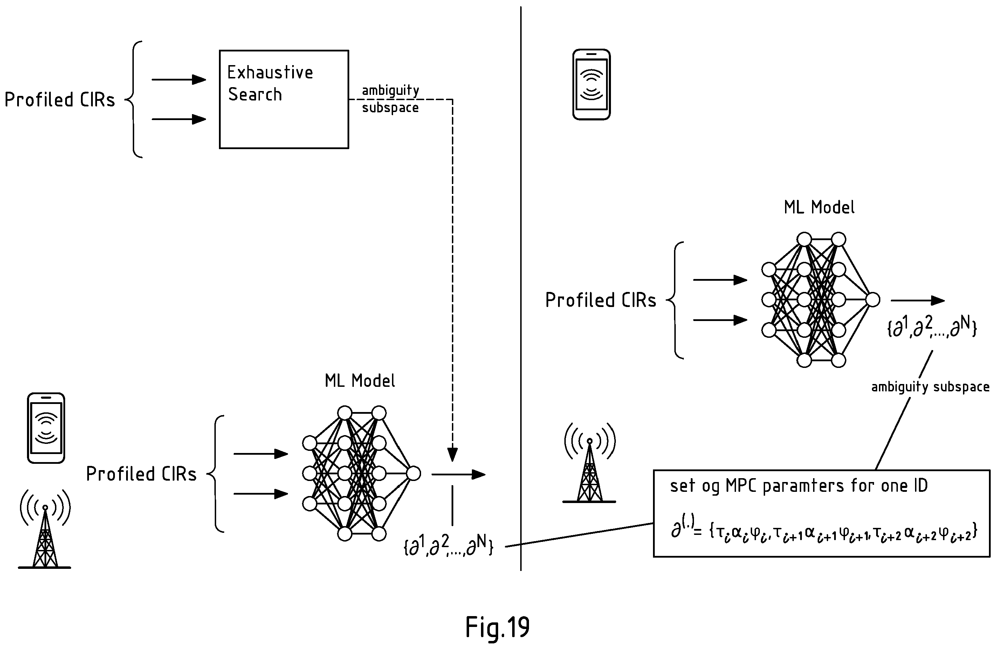

In step 302, i.e. the identifying the at least the part of the subspace may at least partially be based on at least one of:
- an artificial intelligence and/or machine learning method as exemplary illustrated in Fig. 19, 20, 21, 22, and 23;
- a profiling method as exemplary illustrated in Fig. 24, 25, 26, and 29.

An artificial intelligence and/or machine learning method may e.g. be an artificial intelligence and/or machine learning method enabling image recognition or reconstruction, in particular a neural network.

A profiling method may comprise determining (e.g. deriving) a multitude of (e.g. all) possible parameter combinations of MPCs that are consistent (e.g. may result in) the measured signal having the multipath propagation, e.g. in form of a profiled CIR (CIR_{prof}). The profiling method may comprise defining a parameter-grid (e.g. time delay (τ) - amplitude (α)) over a profiled CIR, which may cover at least some or all possible MPC combinations. The method may be performed sequentially, starting from possible (e.g. reasonable) values for a first parameter, e.g. time delay, and identifying possible values for a second parameter, e.g. amplitude. This may be performed for every relevant parameter of an MPC sequentially, e.g. by a nested loop, so that a plurality of (e.g. all) sets of possible multipath components consistent with the first signal may be identified. In this way the first (and/or second) subspace may be identified. A res parameter combination of MPCs that are consistent with (e.g. may result in) the measured signal having the multipath propagation may be referred to as herein as "possible" MPC.

The profiling method may comprise determining (e.g. calculating) an artificial CIR (CIRₐᵣₜ) e.g. based on a least one MPC parameter (e.g. time delay or amplitude) for at least two (e.g. each) of the plurality of sets of possible multipath components that are consistent with the measured (e.g. first) signal. The profiling method may comprise calculating the difference (CIR_{diff}) between a profiled CIR CIR_{prof} of size C^{Nt x1} - with Nt as the number of time domain taps - and the artificially generated profiled CIR for at least two (e.g. each) MPC from the plurality of (e.g. all) sets of possible multipath components consistent with the first signal. This may enable to identify additional MPC parameters (e.g. phase), that were e.g. not identified by utilizing a parameter-grid.

The identifying of at least the part of the subspace may comprise calculating a/the power for at least two (e.g. each) of the identified plurality of sets of possible multipath components consistent with the first signal. The downselecting may comprise excluding sets of possible multipath components from the plurality of sets of possible multipath components based on the power calculated from CIR_{diff} for a set of possible multipath components being e.g. above a threshold, e.g. the threshold may be 0.5 dB above the minimum power calculated from CIR_{diff} for at least two of the identified plurality of sets of possible multipath components.

The profiling method may be implemented on an apparatus, e.g. an apparatus comprising at least one processor and at least one memory, e.g. according to the first exemplary aspect. The method may be implemented in software and may be parallelized, in that e.g. at least two cores of at least one processor or of different processors calculate the method steps in parallel. The profiling method may utilize pre-stored functions such as delay specific SI-functions ( SI(x) = sin(x)/x ). This may enable complexity savings.

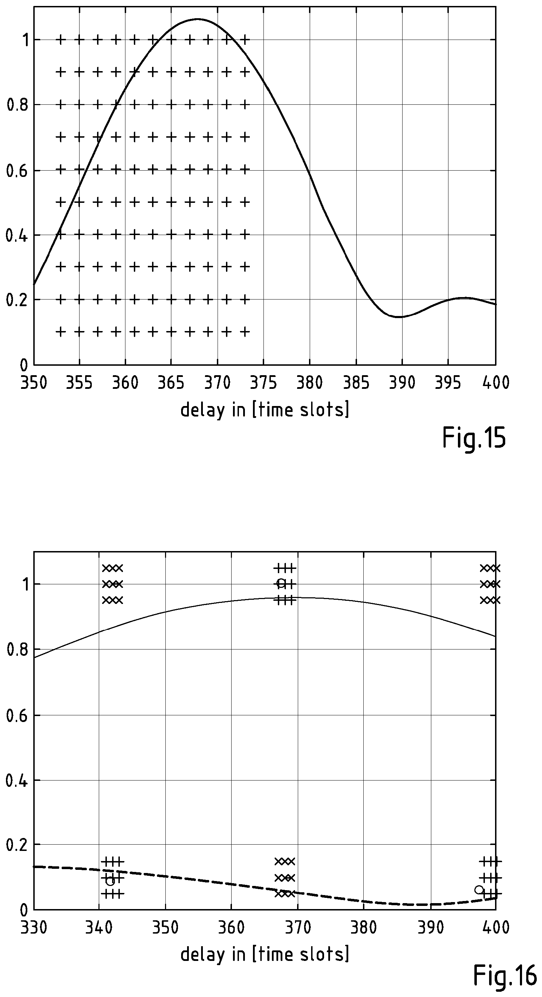

For example, in a first step of a profiling method a τ-α-grid over the profiled channel impulse response CIR_{prof} so that at least two (e.g. all) possible multipath component (MPC) combinations are covered by the grid of points as depicted in Fig. 15 for a course grid and in Fig. 16 for a fine grid having e.g. a tenth of the spacing between the grid points than the course grid. Then, sequentially one of the grid points for the first MPC is selected, e.g. by starting in the first left and bottom point of the grid. Then, a second grid point for a second MPC (again starting from the left bottom point) is selected and so on for every further MPC. In the case of three MPC, in this way via two nested loops, e.g. all possible triplets for the predefined grid of points can be identified. For each triplet a profiled CIR may be calculated by generating an artificial CIR CIRₐᵣₜ. Then the difference CIR_{diff} between the profiled CIR CIR_{prof}(:) of size C^{Nt x1} - with Nt as the number of time domain taps - and the artificially generated profiled channel impulse response for a respective (e.g. each) MPC triplet with index i = 1...I may be calculated as: ${CIR}_{diff} \left(:,i\right) = \left.\left({CIR}_{prof}\left(:\right)-{CIR}_{art}\left(:,i\right)\right)\right| φ_opt ;$

In this example, the grid defining the MPC triplets may cover (e.g. only) the parameters "delay time" and "amplitude" and not the parameter "phase" of the multipath components. Therefore, the condition "|_{φ_opt}" may be applied, which means that the phase of the first MPC is fixed/constant and the phases of second and third MPC are varied over all possible quantized phase combinations. The estimation of the (real) phase may then be based on the mean power Pₘₑₐₙ(φ₂, φ₃) of CIR_{diff} being minimized: $\left\{{φ}_{2 , opt}, {φ}_{3 , opt}\right\} = argmin \left\{mean\left(abs{\left[{CIR}_{diff}\left(:,{φ}_{2},{φ}_{3}\right)\right]}^{2}\right)\right\} ;$

Here, φ₂ and φ₃ are the quantized phases of the second and third MPC and φ_{2,opt}, φ_{3,opt} are then the optimum quantized phases, which result for this set of delay and phase values in the minimum power Pₘₑₐₙ(φ₂, φ₃) for CIR_{diff}. The phase quantization level may, for example, have a value of Δφ = 10 degrees.

Then CIR_{diff}(:,i) may be stored for all MPC triplets as well as the related MPC parameters together with the average power Pₘₑₐₙ(i), which may now be the power under the assumption that the optimal phases φ_{2,opt} and φ_{3,opt} are applied: ${P}_{mean} \left(i\right) = mean \left(abs{\left[{CIR}_{diff}\left(:,i\right)\right]}^{2}\right) ;$

Note that the first dimension of CIR_{diff}(:,:) of size C^{Nt x *I*} is for example the time domain delay values of the profiled CIRs so that we get the mean power of the difference signal.

After all the number of possible I triplets of MPCs have been calculated then one can use the power Pₘₑₐₙ(*i*) to identify those MPC triplets with a Pₘₑₐₙ(*i*) close to the minimum power Pₘᵢₙ = min(Pₘₑₐₙ(*i*)). This set of MPC triplets can be defined by setting a small power threshold of, for example, P_{TH} = 0.5 dB: $\left\{{i}_{ambiguity}\right\} = \left\{\left.{P}_{mean}\left(i\right)\right|{P}_{mean}\left(i\right)<{P}_{min}+{P}_{TH}\right\} ;$

In a next step, this profiling method can e.g. be applied to a fine course grid, having e.g. a tenth of the spacing between the grid points in x- and y-direction than a course grid used for a first iteration of the first subspace. This is depicted e.g. in Fig. 16 and may be used to refine the identified first subspace.

Further, the set of IDs {*i*_{ambiguity}} may define an ambiguity subspace and may be used to identify the related MPC parameters from the stored triplets related to these IDs i.

By suitable parallelization and/or the usage of pre-stored functions where possible like that of delay specific SI-functions ( SI(x) = sin(x)/x ) some complexity savings may be possible.

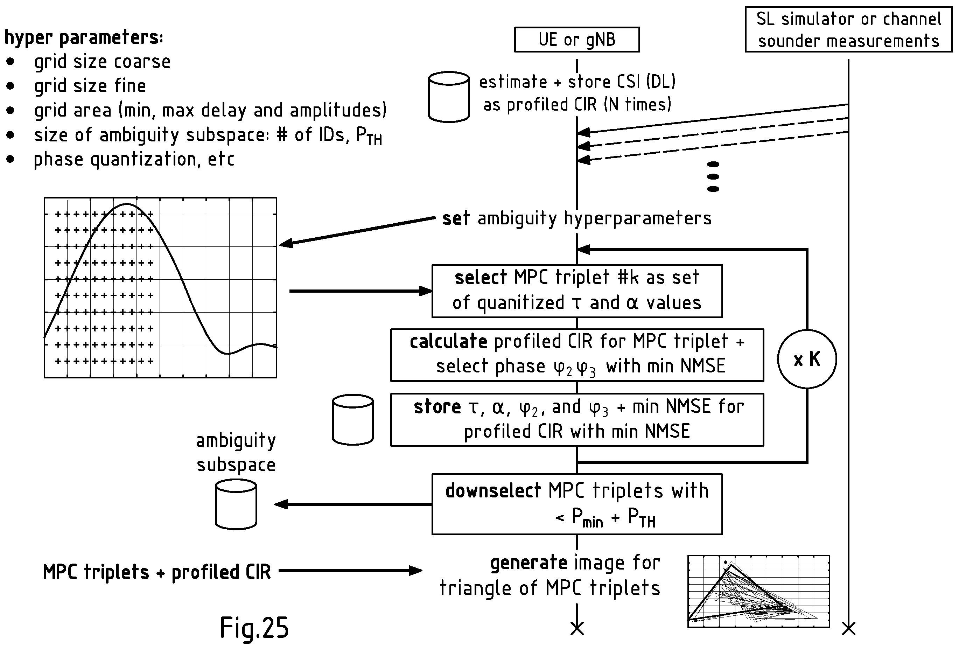

Further options which may enable a reduced complexity may comprise at least one of:
- Downselecting from all MPC triplets those, which are different. As all MPCs may be independent the faculty operation can be applied and only the smaller set of novel MPC triplets combinations may be calculated;
- Applying an iterative approach, i.e., use in a first step a quite coarse grid in τ and α with fewer grid points and then in a second step use a fine grid relative to the MPC triplets as found for the coarse grid. This is illustrated in Figure 25.

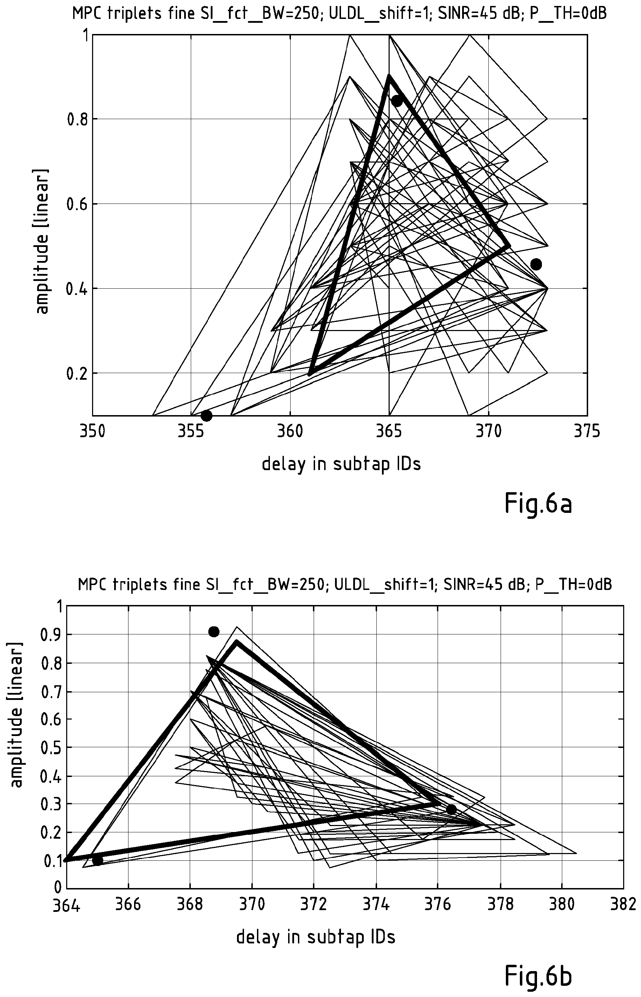

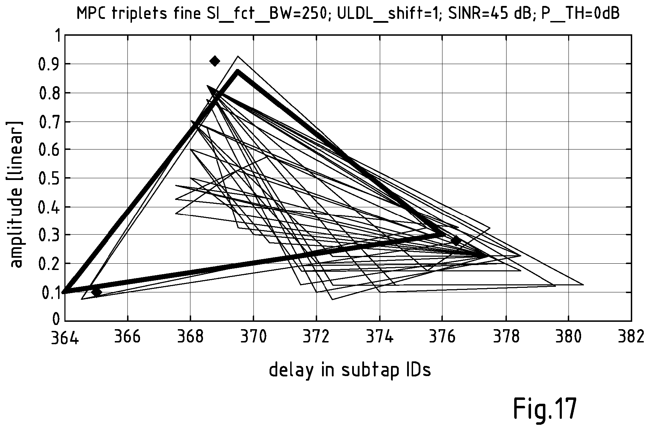

One example of an ambiguity subspace is illustrated in Figures 6a, 6b, and 17 in the form of triangles. The illustration of the ambiguity subspace as triangles may be useful as it directly illustrates, which parameter sets belong to one MPC triplet.

As disclosed above, an artificial intelligence and/or machine learning method may enable a reduced complexity. Such a method may be a DNN, which may include some convolutional network layers, or a conditional generative adversial network (cGAN).

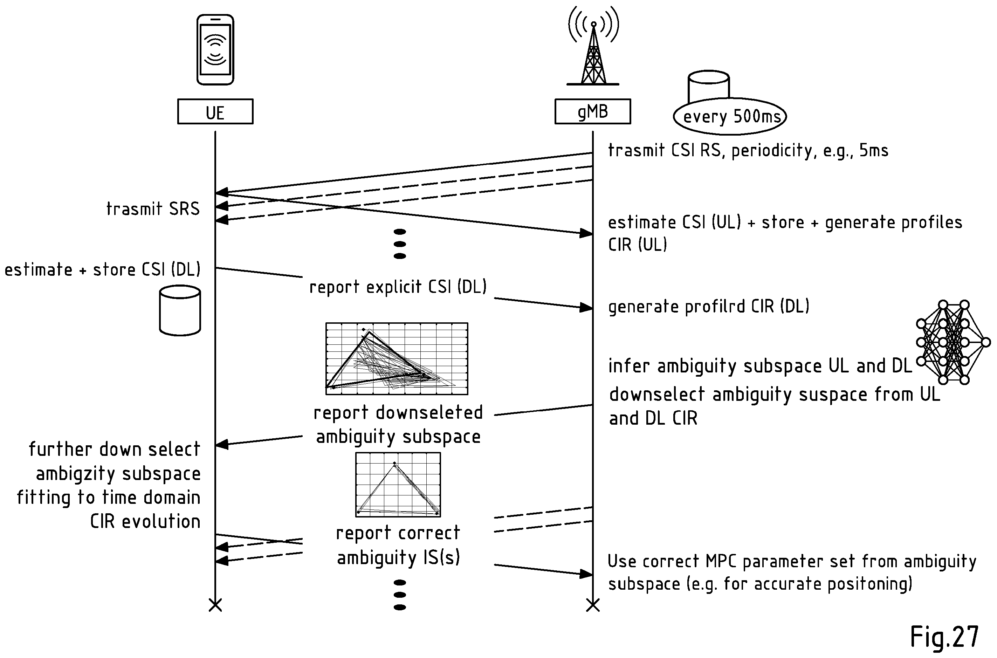

Figure 24 to Figure 27 and 29 illustrate two exemplary options to train and infer (ambiguity) subspaces. As input data radio channels, either from channel models, real world channel sounder measurements, or, from raytracing, may be assumed. As preprocessing of the data a conversion into profiled CIR, which can be done as explained in W. Zirwas and M. Sternad, "Profiling of mobile Radio Channels," ICC 2020 - 2020 IEEE International Conference on Communications (ICC), 2020, pp. 1-7, doi: 10.1109/ICC40277.2020.9148839, which may be similar to an oversampling operation. For example, in case the radio channel is given as a frequency domain channel transfer function with reference signals every 12th subcarrier as known for 3GPP LTE or NR, first an IFFT is applied and then an oversampling by a factor of, e.g., 8, 16, or, 20 is applied. The typical shape of a profiled CIR is illustrated in Figure 27 as well as Figure 24.

For example, a (D)NN may be trained using (e.g. offline) data sets of profiled channel impulse responses and the corresponding subspaces as exemplary depicted in Fig. 19.

Fig. 19 is a schematic diagram illustrating exemplary utilization of a DNN for identifying a first or second subspace. On the left: offline training, right: online inference. DNN based training and inference of ambiguity subspace. The training data may be generated by exhaustive search for identifying the ambiguity subspaces of radio channel data, e.g., from channel models, real world measured data, or, from raytracing. The ambiguity subspace may be given as triplets of multipath component parameters delay, amplitude and phase (τ, α, and φ).

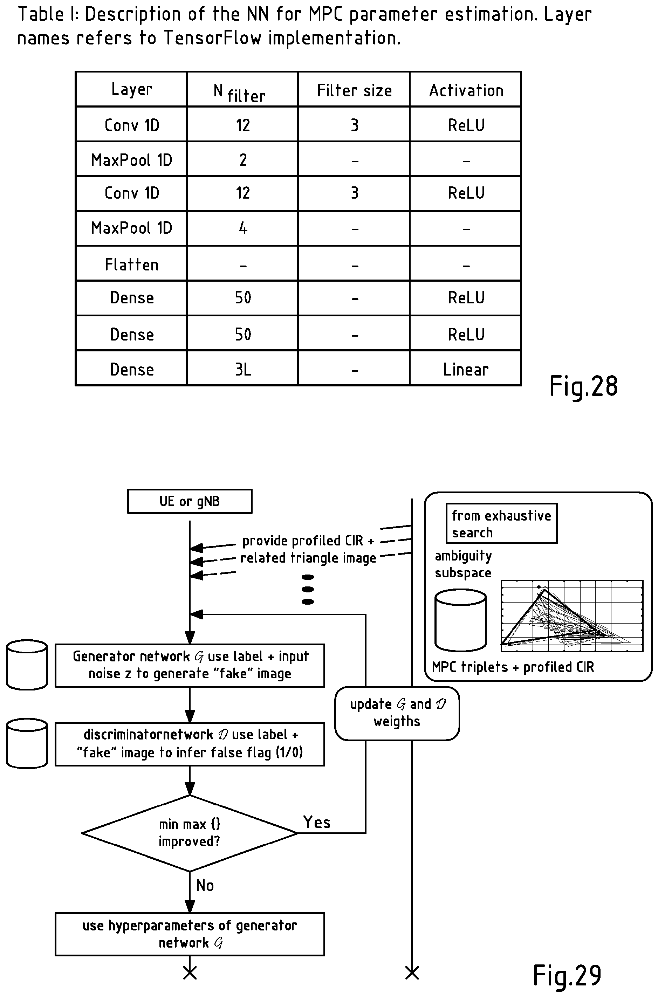

For the training the subspaces may be identified by a profiling method. The (D)NN may be trained by a supervised training, where during training different profiled channel impulse responses are entered and the (D)NN is trained to output the corresponding subspace, e.g. in form of a set of indices, e.g. I_{ambiguity} MPC triplets. The cost function for training may for instance be the difference of the inferred sets of MPCs (e.g. ambiguity triplets) versus that found by the profiling method, which may be minimized. During inference phase the (D)NN infers the subspace (e.g. set of MPC triplet parameters) (directly) from the profiled channel impulse responses. A description of the NN for the MPC parameter estimation, wherein layer names refer to TensorFlow implementation, can be found in the Table in Fig. 28.

The cost function 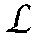 may be the direct inference of the MPC triplets: $L = mean \left[{\left({τ}_{1} {α}_{1}-τ{′}_{1} α{′}_{1}\right)}^{2}, {\left({τ}_{2} {α}_{2}-τ{′}_{2} α{′}_{2}\right)}^{2}, {\left({τ}_{3} {α}_{3}-τ{′}_{3} α{′}_{3}\right)}^{2}\right] ,$ where (τᵢ αᵢ - τ'ᵢ α'ᵢ)² is the Euclidian distance between the true and the inferred MPC parameter points delay τᵢ and amplitude αᵢ.

The training of such an AI/ML method may be done until i) the cost function 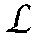 is not improving any longer and/or ii) if it has become better than an inference error ε. The inference error ε may be (e.g. about) half that of the grid spacing as defined by the ambiguity (e.g. hyper-) parameters.

Figure 19 illustrates an option based on a DNN, which potentially may include some convolutional network layers. Shown on the left: offline training, shown on the right: online inference. DNN based training and inference of ambiguity subspace. Training data is e.g. generated by exhaustive search for identifying the ambiguity subspaces of radio channel data, e.g., from channel models, real world measured data, or, from raytracing. The ambiguity subspace is given as triplets of multipath component parameters delay, amplitude and phase (τ, α, and φ). Figure 19 illustrates the training phase as well as the inference phase and relies on an offline data set of profiled CIRs and their ambiguity subspaces. It is assumed that these ambiguity subspaces are known, for example, from an exhaustive search process as disclosed above.

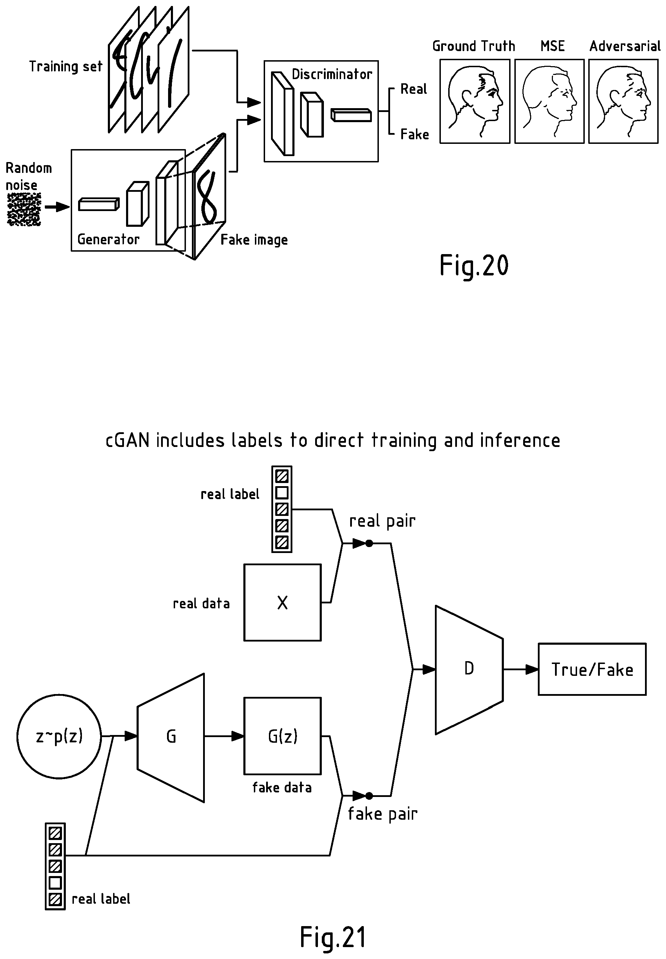

As another example, a (c)GAN may be used to identify the subspace as exemplary depicted in Fig. 20 and 21. So, a (e.g. conditional) generative adversial network ((c)GAN) may be used for ambiguity subspace inference. Figure 20 illustrates a classical GAN and Figure 21 illustrates the extension to a conditional GAN, which includes a label to identify what the GAN should infer. Fig. 20 illustrates an exemplary GAN structure as a Minmax-game, so that the generator can infer fake images, which are so real that a discriminator may not be able to distinguish real from fake images. Fig. 21 illustrates an exemplary conditional GAN (cGAN) as an extension of the GAN, with the goal to direct the inference to generate images of a specific kind as defined by the provided label input.

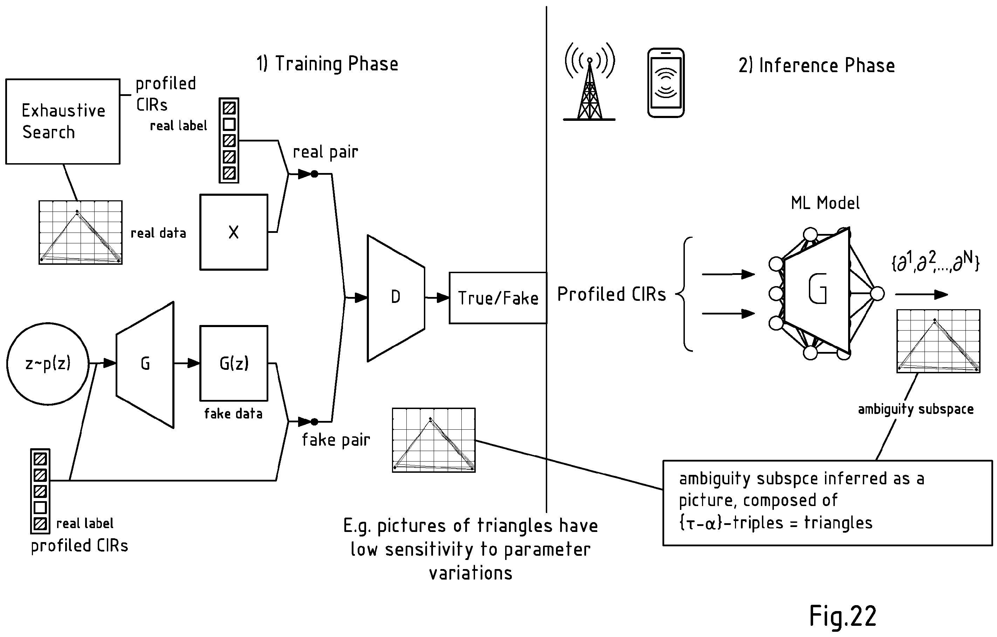

A profiled CIR may be used as a label, which is used to steer the inference of the subspace in the (c)GAN. GANs can be used for image generation. A subspace may be represented by an image of e.g. a polygon, e.g. MPC triplets may define triangles, MPC quartets may define tetragons, MPC quintets may define pentagons. The cost function may be to recreate same or a similar set of polygons, e.g. triangles, for a given CIR. Such (offline) data sets of profiled CIRs and the corresponding subspaces may be utilized for training, e.g. a training set may be obtained by an exhaustive search of the ambiguity subspace for different CIRs (e.g. a profiling method). An exemplary implementation of the training and inference phases is illustrated in Fig. 22.

In Fig. 22 a training of a cGAN is illustrated, and an identifying at least a part of a first subspace of a plurality of (e.g. all) sets of possible multipath components consistent with the first signal based on a trained cGAN. The input label (= condition) may be the profiled channel impulse response of the radio channel for which the first subspace should be identified. The identified subspace may consist in an exemplary embodiment of triplets of sets of three MPCs, which are identified as triangles as depicted in Fig. 6a, 6b, and 17, wherein the corner point of each triangle are the multipath component parameters delay τ and amplitude α of the three MPCs within a set of MPCs (triplet). A respective (e.g. each) triangle may provide one possible combination of MPC parameters of the first subspace and the number of triangles may define the size of the first subspace.

For cGANs, a minmax optimization may be used (cf. Fig. 20), where the discriminator probability to identify a 'fake' image is maximized and simultaneously the probability for the generator network G is maximized to generate images which will pass the discriminator network D: ${min}_{G} {max}_{D} {E}_{x} \left(log\left(D\left(x\right)\right)\right) + {E}_{x} \left(1-log\left(D\left(G\left(x\right)\right)\right)\right)$

In this case, the generator network G may generate images of the subspace, e.g. triangles for a given profiled channel impulse responses (the condition or label) and the discriminator network D may identify images from G deviating from the expected outcome for the given profiled channel impulse response. So, eventually the generator network G learns to directly infer from the profiled channel impulse response the image of triangles. The inferred triangle images may indicate all the relevant generally possible MPC parameter triplets.

The correct triangle images (used for training) may be e.g. obtained by a profiling method or an exhaustive search as depicted in Fig. 25. A high level illustration of the cGAN training is illustrated in Figure 29. Note that the 'fake' and correct images do not have to be hundred percent aligned. Important is that the inferred triangle images indicate all the relevant generally possible MPC parameter triplets. This may be sufficient for the downselection later on, for example, by mapping of the UL and DL MPC triplets. After identifying a general solution (i.e. an estimation of the set of MPC) such as this, a (final) fine tuning step may be applied to find the best or a better estimate for the correct parameters as such.

As depicted in Fig. 20 a GAN structure as a Minmax-game may identify a set of multipath components by generating fake images, which are as close to real images that a discriminator may not be able to distinguish real from fake images. The conditional GAN (cGAN) is an extension of the GAN, that may be suitable to directly identify sets of multipath components (i.e. identify at least a part of the first subspace) by generating images of a specific kind (e.g. of polygons) as defined by a provided label input.

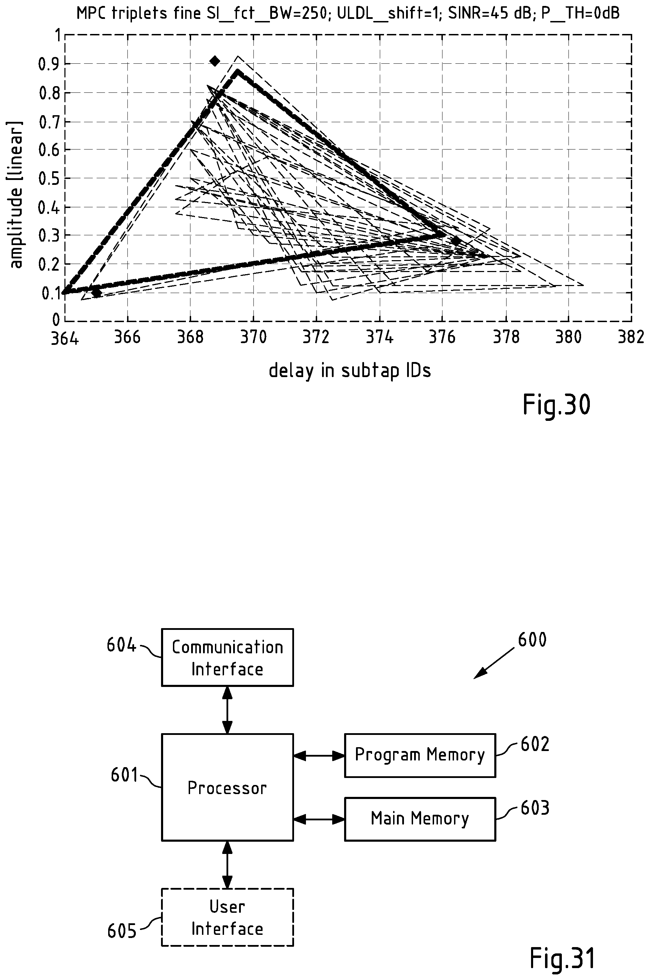

When an image, e.g. a triangle or pentagon, is identified a further method may be implied for identifying the values at the corners of the respective polygon. A computer vision (CV) method may for instance be used, which is e.g. trained to infer polygons and their corner points. Alternately, the image may be analysed based on the pixel values, e.g. the image may be representable by a matrix of white (='0') and black points (= '1'), so that the corner points may be identified by an evaluation of black points in the columns. E.g. starting without loss of generality from the left, first only columns having only zeros may be found. The first column having a occurrence of a non-zero value may then be considered to include the first corner point. The lines connecting this point to the next corner points may then be followed through the columns, so that at least some or all corner points may be identified. This method may be repeated for all polygons. Therefore, the polygons may be considered one at a time, e.g. by removing an identified polygon from the image after all its corner points were identified. This CV method may e.g. be used if the identified images are distorted, e.g. blurred as illustrated in Fig. 30 in case the (real) image would be as illustrated in Fig. 17.

Different colours or drawing styles (e.g. width of the lines or full versus dotted lines) may be used to encode MPC parameters in the images, e.g. by drawing different polygons in different colours depending on e.g. the amplitude or phase. This may enable a simplification of the remapping of the images to MPC parameters.

Note that images for example of polygons (e.g. triangles) may be preferred over images just of dots at the (triangle) corners as images of polygons (e.g. triangles) may be more reliable for the cGAN generator. Even if the image is missing some dots or corner points a reconstruction of the basic (triangle) shape can still be performed, so that a good first estimate of the MPC parameters may be obtained.

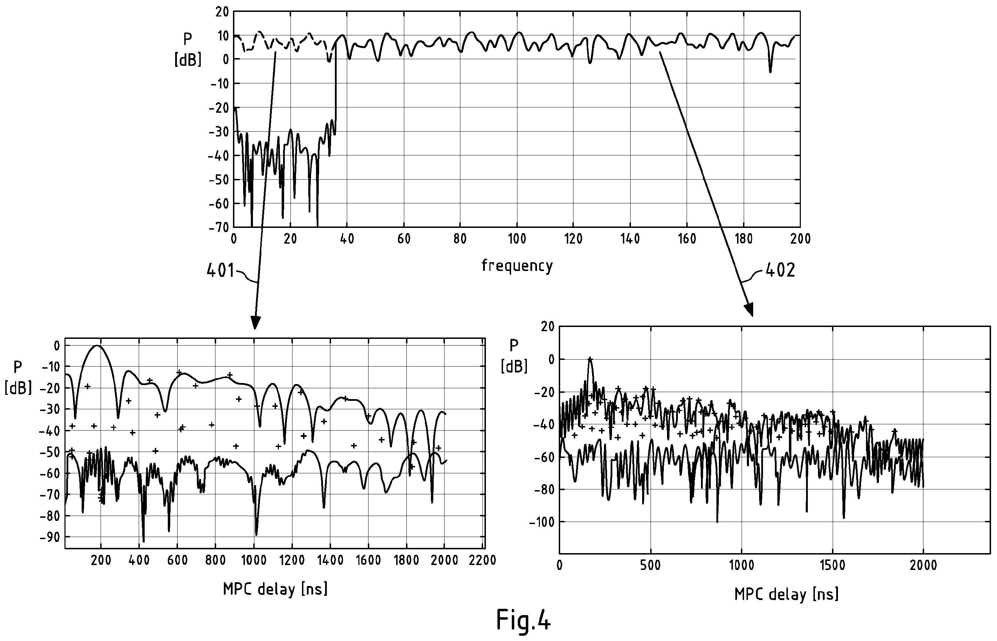

In the following, an exemplary embodiment is described with regard to simulation results. For evaluation, a set of multipath component parameters of a 200 MHz channel sounder measurement for a mobile radio cell in Berlin is used as illustrated in Fig. 4. The high bandwidth allows to compare the inference results for a 200 MHz bandwidth with the super resolution result for a 40 MHz radio channel. In Fig. 4 the top curve (dashed line) is the 200 MHz channel transfer function for the beamformed MIMO radio channel and the lower curve (solid line) a reconstruction based on expected MPCs obtained by applying a distance measure such as NMSE. The first 40 MHz is then the FDD uplink 40 MHz bandlimited radio channel and the 40 MHz at the end for the FDD DL channel. So, in parallel a parameter super resolution with an artificially limited bandwidth of only 40 MHz is derived from this measurement. An estimation of the set of multipath components is identified for the 200 MHz radio channel using a profiling method. This estimation is assumed to be the correct (real) set of MPC, i.e. the ground truth. The profiled channel impulse response for the 40 MHz UL radio channel as well as for the full 200 MHz 'ground truth' radio channel is then generated 401, 402 as illustrated in Fig. 4 lower left and right.

Both profiled CIRs as well as the estimated delays and amplitudes of the multipath components can be found in Fig. 4 bottom.

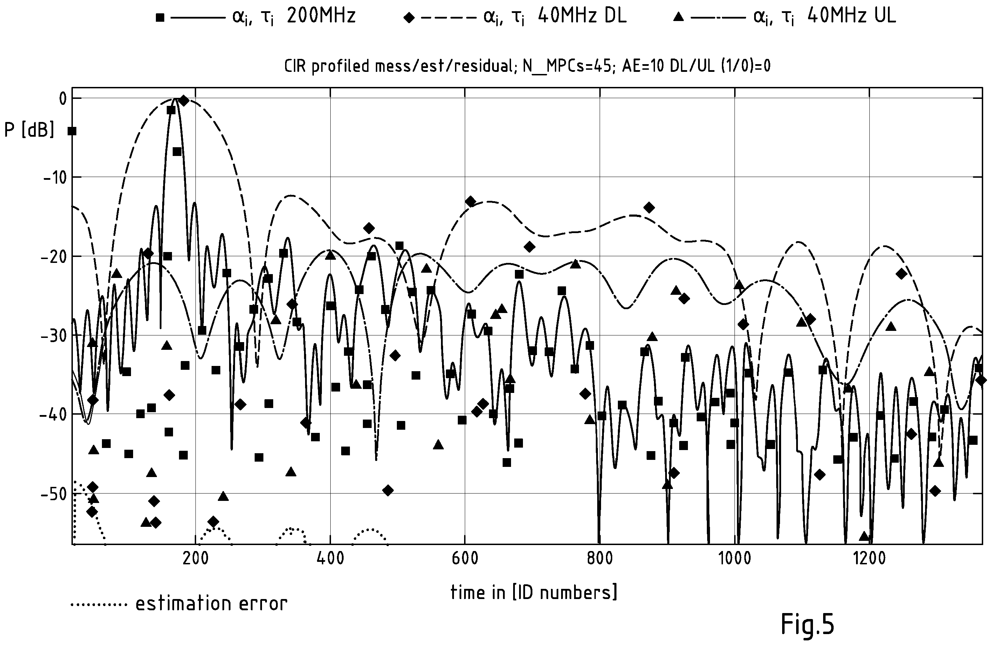

For a better visibility in Fig. 5 the profiled channel impulse responses (solid, dashed, and dash-point lines) as well as the estimated multipath component parameters (here: delay and amplitude) for the full 200 MHz radio channel (serves here as ground truth) and for the 40 MHz UL as well as DL radio channels are illustrated. Fig. 5 is a graph illustrating an exemplary profiled channel impulse response for full RF bandwidth of 200 MHz (dashed line) and UL (dash-point line) and DL (dashed line) with only a 40 MHz RF bandwidth. The black boxes, diamonds and triangles are then the estimation results of the profiling algorithm for the related relevant multipath components. In case of a perfect super resolution method the estimates/inferences for all three RF radio channels (200 MHz, UL and DL) should come to the same result and the crosses indicating the relevant multipath components (delays τᵢ and amplitudes αᵢ) should fall together. But, the 200 MHz radio channel identified a much higher number of multipath components compared to the limited bandwidth UL and DL radio channels. Also, UL and DL estimates of the multipath component parameters deviate significantly from each other.

Figure 4 and Figure 5 also show, that as further information the estimation error between the profile from the measured signal as well as from the reconstructed profile using the estimated multipath component parameters are included. Despite the quite significant deviation of the UL and DL multipath component parameters, the estimation error(s) are in (e.g. all) shown cases close to -50dB relative to the strongest multi path component.

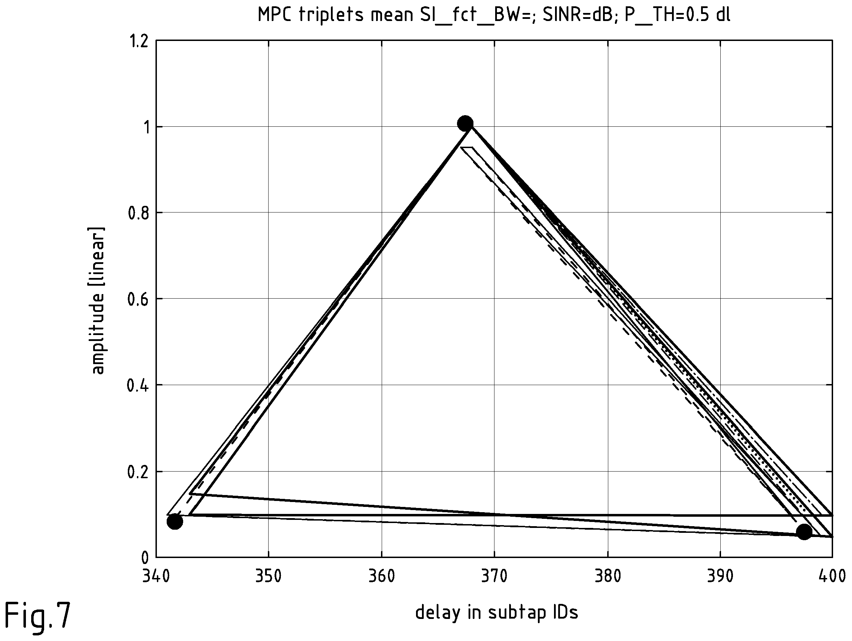

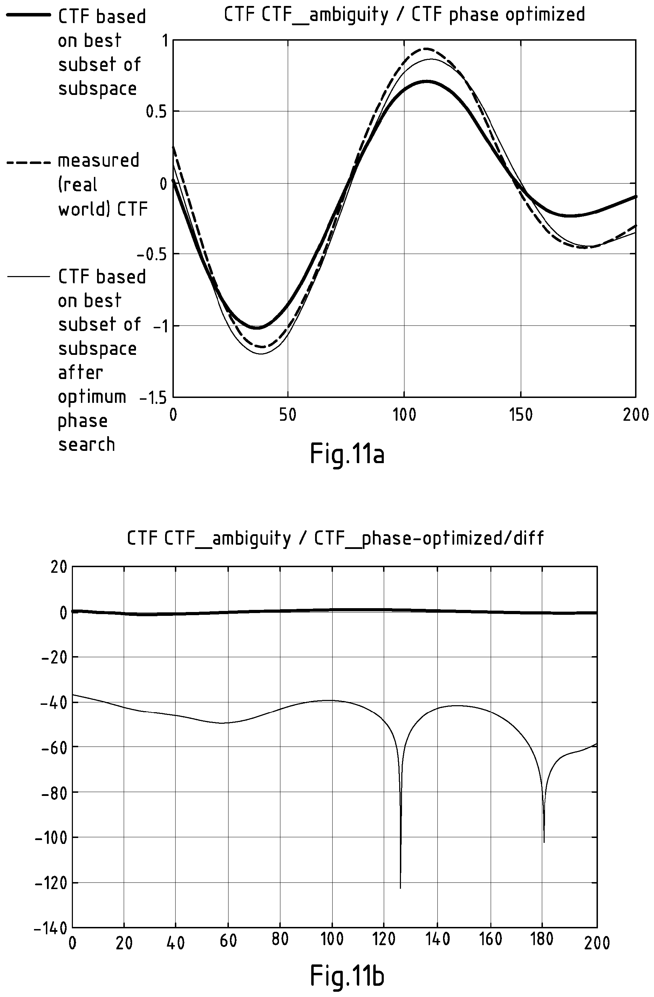

Next an exemplary embodiment of a method according to the second exemplary aspect is given, in which the method is applied to estimate the relevant multipath components and their parameters like delays τi, amplitude αi as well as phase φi. For this example embodiment, in particular sets of multipath components with a relative delay less than half a tap delay are considered. Therefore, an artificial radio channel comprising (e.g. only) three multipath components close to the strongest multipath component is generated. Further, an UL and DL RF bandwidth of 40 MHz is assumed in this example. A generated profile CIR is depicted in Fig. 4 and in Fig. 11a and 11b alongside a profile CIR generated using an estimation of set of multipath components. In Fig. 6a, 6b, and 7 (also in Fig. 17) three black dots are drawn indicating the (real) ground truth set of multipath components on top of an identified (ambiguity) subspace indicated by triangle shapes, wherein the corner points of the triangles indicate the corresponding set of multipath components. The ambiguity of the multipath components is caused as it can be reconstructed for a given error signal bound the same channel impulse profile by a multitude of multipath component parameter sets τi, αi and φi. Even for a very low error signal power, there may exist a high number of possible multipath component parameter combinations, i.e., there may exist an ambiguity subspace of parameter combinations τi, αi and φi, which would fit to the estimated profiled CIR. The (ambiguity) subspace may then be represented by the sets of possible parameter combinations ({τi αi φi}, i = 1...N) for the N multipath components, which may lead to a limited difference signal power P_{diff} between a measured profiled CIR and that generated from any multipath component subset of the ambiguity subspace. In other words, the ambiguity subspace may contain or comprise all possible multipath component parameter combinations for N MPCs, which fit/match to the measured profiled CIR.

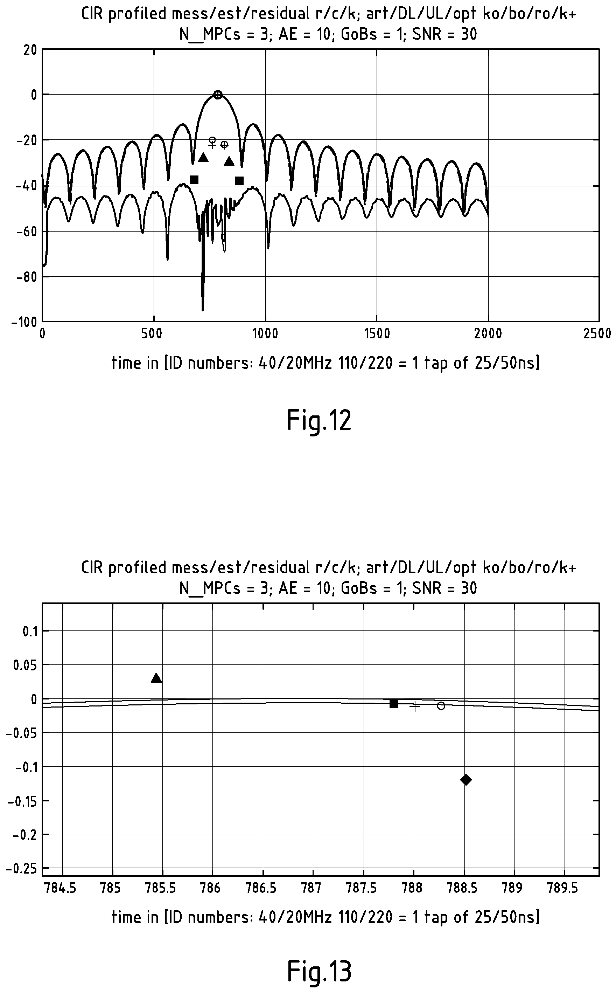

Next, the multipath components may be estimated based on a distance measure such as NMSE to obtain an expectation of the MPC. This may be done once from the UL and once from the DL RF band with 40 MHz each and get then the black boxes and triangles in Fig. 12 and 13. As depicted in Fig. 4, expected multipath component parameters from UL, DL and from the full RF bandwidth (=ground truth) do not match to each other. Note that this can be observed as well from the related UL and DL channel transfer functions, which fit either to the UL- or the DL- RF bands, but not to both (not shown here).

In a next step the first (ambiguity) subspace is identified, e.g. inferred, for the first (e.g. UL) radio channel, e.g. by using a profiling method, which in this case may use the expected MPC and apply the profiling method to an area close to these expected MPC, e.g. within half a time delay tap. The resulting subspace is illustrated in Fig. 6a and 6b as a set of triangles (e.g. each of the triangles relates to one allowed set of multipath components, i.e. one set of MPC consistent with a first signal), wherein a respective (e.g. each) corner point defines or represents the delay and amplitude values of one of the three multipath components. In this case, the relative phases per set of multipath components have been optimized to achieve the smallest possible NMSE error (PNMSE) between the measured and the estimated profiled CIRs. The relative phases per multipath component may be optimized to achieve a minimum NMSE power for the error signal. The ambiguity subspace of triangles in Figure 6a are that small subset of all possible triplets of multipath components giving the smallest PNMSE.

Fig. 6a and 6b provide two sets of triangles, Fig. 6a for a first coarse estimation, and, Fig: 6b for a more accurate fine grid of multipath component parameters. Different grid sizes may be applied to achieve higher accuracy and/or lower estimation complexity. For example, identifying at least a part of the subspace may comprise using several (e.g. one or two) profiling method, e.g. first a profiling method having a coarse grid may be used and in a next step a profiling method with a finer grid may be applied, which may be limited to the parameter space close to the MPC identified using the coarse grid. Having in this way e.g. two or three fine tuning steps the accuracy may be iteratively improved, while the complexity is kept reasonably low in a respective optimization step/round/iteration. For that purpose, in the second step shown in Fig. 6b, (e.g. only) grid points close to the triangles at the left have been considered so that the search space is significantly reduced. However, instead of using a profiling method in the first, second step or any other step of identifying the at least part of the subspace an artificial intelligence and/or machine learning method may be used. Such AI/ML based inference of the ambiguity subspace may better cope with the processing complexity and latency. An AI/ML implementation strategy may comprise:
i. applying supervised learning to a DNN neural network, which maps as input a profiled channel impulse response at the output to a set of K triplets of best fitting multipath components. The cost function is then the closeness of the inferred ambiguity subspace (set of multipath component triplets) compared to the known one. For the supervised learning step, first the correct ambiguity subspace for a large set of profiled channel impulse responses may be obtained by means of an exhaustive search, i.e. using a profiling method as described above. This may, however, done only once for offline training so that the related processing time for the exhaustive search is not a real issue;
ii. based on Figure 6a it may be seen that the triangles of the multipath component triplets have some similarities to an image. Therefore, an AI/ML method may be applied from image recognition or reconstruction. An artificial intelligence and/or machine learning method enabling image recognition or reconstruction may be used. For example, a cGAN neural network, where the conditional input is the profiled channel impulse response, may be applied. The cGAN may be trained to generate images with triangles being close to that of the ambiguity subspace; ; and/or
iii. AI/ML methods may be combined with explicit rule based PHY layer algorithms like the above described exhaustive search. Here, this may comprise to first make a coarse estimate of the ambiguity subspace by AI/ML based methods as described above and then to apply iterative explicit PHY layer optimization and fine tuning steps.

The output of these ambiguity subspace estimations may be used in addition to the multipath component parameter inferences performed by DNNs, e.g. for (further) fine tuning. The identified ambiguity subspace may e.g. be used either for identification of the best fitting subset of MPCs, or, may provide a reliability measure for the so far estimated multipath component parameters.

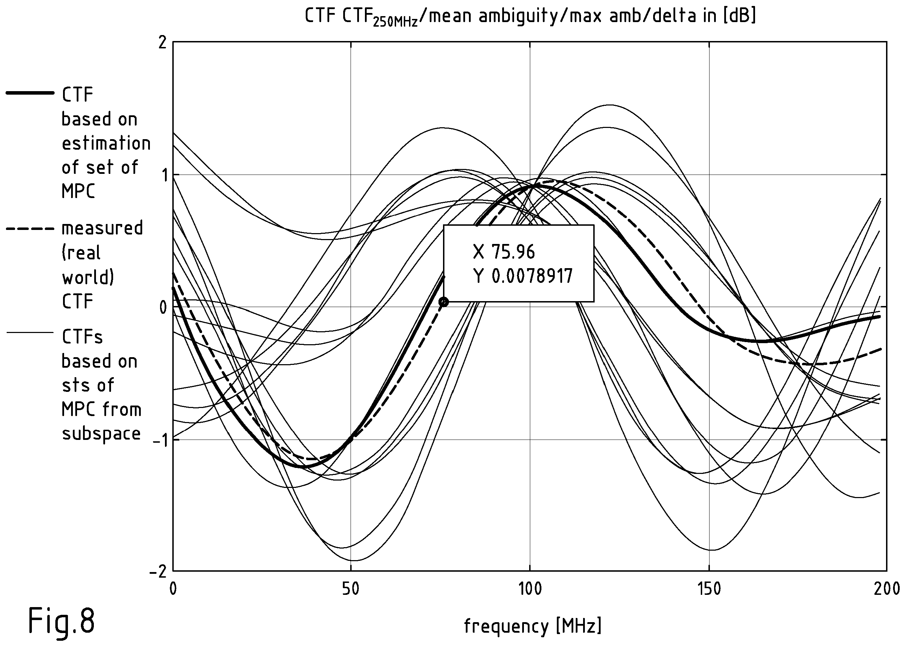

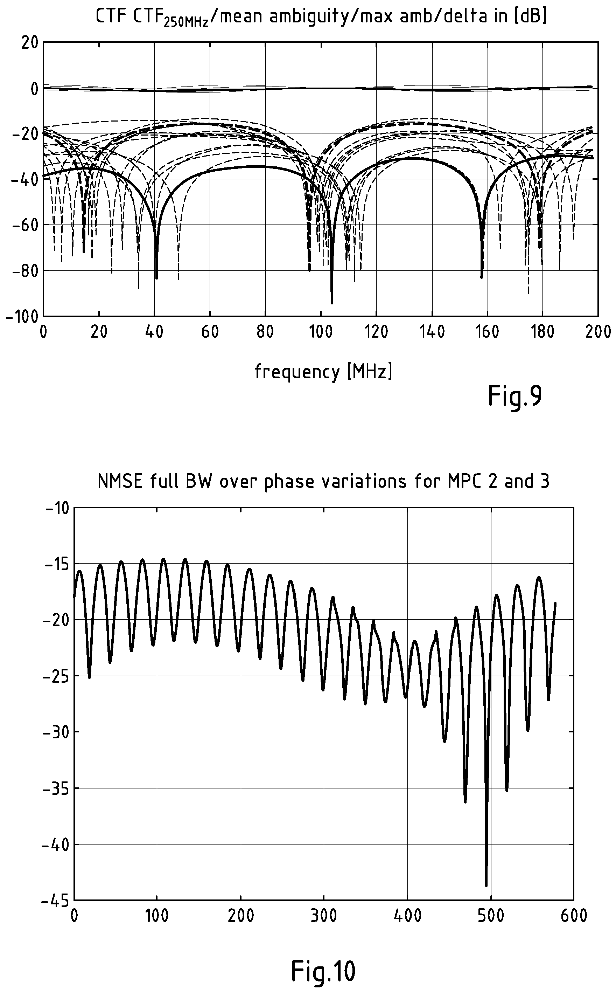

In Fig. 7, an ambiguity subspace for three multipath components is illustrated. Black dots 'o' indicate the correct multipath component parameters. The x-axis is time delay (110 is one tap delay of 40MHz bandwidth); and the y-axis is the linear amplitude α. In Fig. 7 a fine tuned (ambiguity) subspace after at least one fine tuning step as e.g. described above is illustrated. The identified (fine tuned) subspace may be transferred into the frequency domain channel transfer function over the full 200 MHz RF bandwidth, which is illustrated in Figure 8, showing the absolute (abs) of channel transfer function in [dB]; the dashed line illustrated the measured (real world) CTF; the black lines are based on sets of multipath components from the identified subspace, i.e. they represent the ambiguity subspace in CTFs; the thick black line indicated the CTF obtained based on the estimation of the set of MPC from the downselected subspace, e.g. the best fitting multipath component set from the ambiguity subspace illustrated in Fig. 8 by the slim black lines. The bold black curve is based on the estimation of the set of multipath components, e.g. the downselected multipath component subset, which is - as can be seen - quite a good match over the full RF bandwidth. This can be verified with Fig. 9, which includes the NMSE for the measured versus the estimated CTF. In Fig. 9, the ambiguity subspace in CTF frequency domain (from Fig. 8) is illustrated as the top black lines and difference error signals to real world CTF as dashed lines, wherein the error signal for the best multipath component subset, i.e. the estimation of the set of MPC, is illustrated as a slim black line, wherein the error signal is minimized.

This result may be further optimized e.g. by re-calculating the best relative phases of the selected best multipath component triplet. For that purpose the relative phases and calculated the NMSE over all possible phase combinations may be varied. A result of this may be found in Figure 10, wherein the NMSE over phase variations for best multipath component subset is illustrated. The best relative phases per MPC are at ID 492 with an NMSE of -44 dB. An optimum with a very low NMSE for the phase combination can be found at ID 492. The resulting optimized channel transfer function can be found in Figure 11a and the related NMSE as the lower slim black curve in Fig. 11b. In Figure 11a the dashed curve illustrates the real world CTF; the thick black curve the best subset of ambiguity subspace as selected above; and the slim black curve the best subset after optimum phase search per subset of multipath components as described. In Figure 11b the real (dashed) versus estimated (thick black) CTF and the relative difference in [dB] (lower slim black) are illustrated. It can be observed that the slim black curve (in Fig. 11a) matches extremely well with the dashed real world CTF curve. A gain compared to the thick black curve without phase re-calculation.

Possible accuracy gains can also be assessed, as shown in Fig. 12, wherein the profiled CIR for a 40 MHz signal (one tap delay = 110) is depicted as a thick black curve (the top curve); and black boxes, triangles and circles indicate estimated MPC parameters for UL/DL/real CTF and crosses indicate the best downselected ambiguity subset. In Figure 12 the crosses from the downselected and optimized ambiguity subspace are now quite close to the black circles, which define the ground truth. Figure 13 provides a closer zoomed look for the same CTF close to the strongest LoS multipath component, the cross is now very close to the correct multipath component values with respect to delay and amplitude.

By converting the relative delays into relative distances the impact on e.g. the position accuracy may be assessed. In this case a positioning error of 0.31m for the UL, 0.03m for DL and 0.012m for the downselected and optimized ambiguity subspace parameter estimates may be achieved.

The following embodiments shall also be considered to be disclosed:
- For subspace downselection also certain well known "marker subtap regions" may be used. For example, street crossing with markant parameter changes so that exact locations can be identified. That way a high reliable UE positioning at these marker regions may be achieved and a best match to the predicted profiled multipath component parameters may be identified;
- Another option for ambiguity subset downselection may be to use a digital twin, which may identify prohibitive solutions with respect to delay and AoA values for the given scenario. This may at least reduce the allowed ambiguity subspace size.
- For positioning, for example, based on the known ambiguity subspace, one may evaluate the relative variance for the strongest LOS MPC for the different multipath component triplets of the ambiguity subspace. In case these variations are sufficiently small one may be able to skip the downselection step. This may be limited by the accuracy requirements for a given use case;
- Radio channels may comprise more than two to five multipath components. So, the multipath components considered herein may e.g. be limited to those two to five multipath components with a below half-tap delay spacing around the strongest multipath component;
- an apparatus according to the first exemplary aspect may (further) comprise means for and/or a method according to the second exemplary aspect may comprise reporting at least part of the downselected subspace, e.g. reporting to a LMF. The LMF may take the at least part of the downselected subspace into account for positioning. This may allow for a higher positioning accuracy based on the downselected subspace (e.g. lower remaining ambiguity after down-selection);
- an apparatus, e.g. a UE, according to the first exemplary aspect may (further) comprise means for and/or a method according to the second exemplary aspect may comprise reporting DL CIR for e.g. down-selection, e.g. as additional information. For example, a UE may report DL CIR to a gNB for downselection, e.g. as additional information;
- a method according to the second exemplary aspect may comprise exchanging the at least part of the identified and/or downselected subspace between an apparatus and a further apparatus, e.g. between a UE and a gNB. The method may further comprise quantifying parameters of the exchanged at least a part of the identified and/or downselected (ambiguity) subspace (e.g. quantization step, max and min values);
- a method according to the second exemplary aspect may comprise exchanging a spatial domain information, e.g. information on a digital twin and/or information on the geography and/or a building vector data matrix or building vector map between an apparatus and a further apparatus, e.g. between a UE and a gNB.

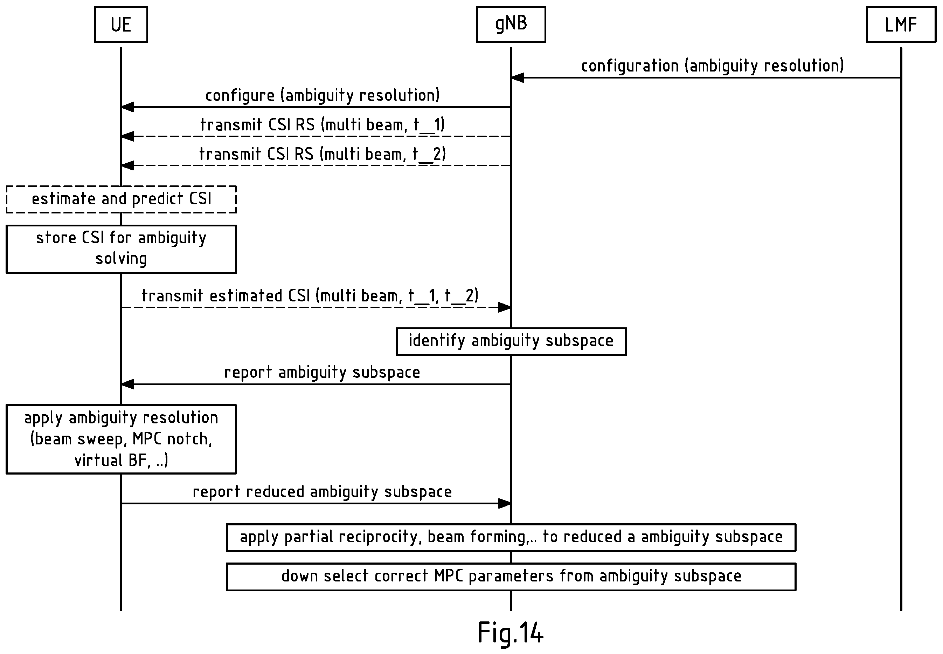

Fig. 14 shows a flowchart showing an example embodiment of a method according to the second exemplary aspect and/or an example embodiment of a system according to the third aspect. A system comprising a gNB and a UE (optionally an LMF) is illustrated. An LMF may provide a configuration, e.g. an ambiguity resolution (i.e. downselecting and optionally identifying an estimation of the set of MPC), e.g. to the gNB. The gNB may cause the UE to be configured with an ambiguity resolution, may transmit a first CSI RS (e.g. multi beam t1) and/or transmit a second CSI RS (e.g. multi beam t2). The UE may receive the first and/or second CSI RS. The UE may than be configured to estimate and predict CSI and to store CSI for ambiguity solving (i.e. for downselection and/or identifying an estimation of the set of MPC). The UE may then transmit the CSI (e.g. multi beam t1, t2). The gNB may receive the transmitted CSI and may identify the (ambiguity) subspace. The UE may then transmit the identified subspace. A/the UE may receive the transmitted subspace. The UE may apply an ambiguity resolution, e.g. beam sweep, MPC notch, virtual BF, etc. The UE may report the reduced (i.e. downselected) subspace. The gNB may receive the reduced subspace and may apply partial reciprocity, beam forming, etc. to further reduce the (ambiguity) subspace and to downselect an estimation of the (correct) set of MPC.

Fig. 15 illustrates the start of an exhaustive search by defining a grid over the relevant delay and amplitude range for the given profiled channel impulse response. Relevant aspects may be deduced from the shape of the CIR, so that it may be ensured that all relevant possible multipath component combinations are covered.

Fig. 17 represents a graph illustrating an exemplary outcome of identifying a first subspace, the exemplary outcome of e.g. a search of the ambiguity subspace. Quite diverge multipath component combinations (see the triplets) may be observed. Black dots indicate the real truth MPC parameters, which are quite well covered by this ambiguity subspace.

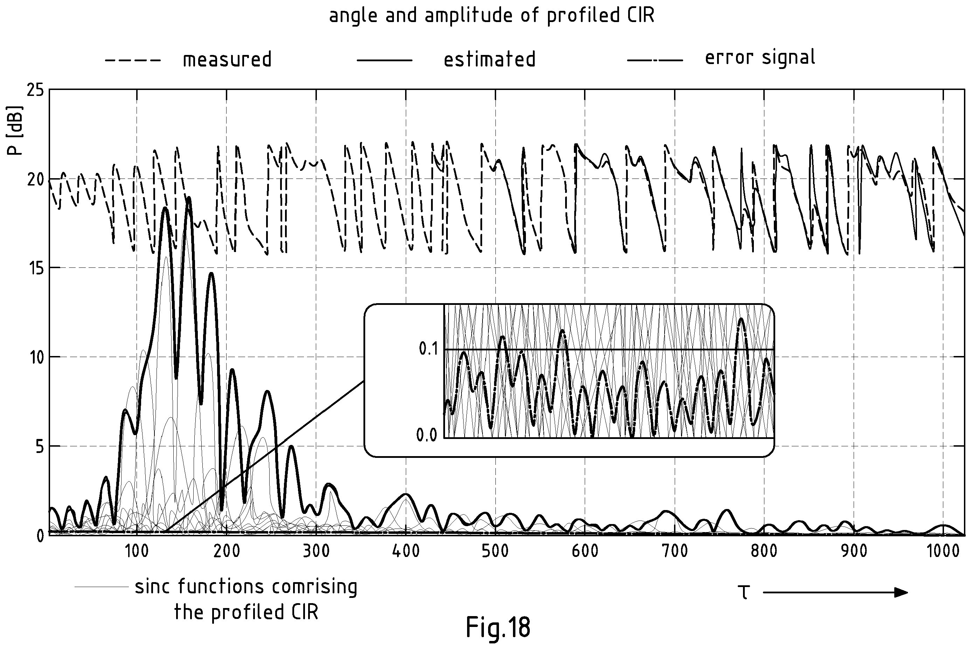

Fig. 18 is a graph illustrating an exemplary shape of a profiled channel impulse response (thick black line), in this example for a measured NLOS real world radio channel.

Fig. 24 is a flowchart showing an example embodiment of a method according to the second exemplary aspect and/or an example embodiment of a system according to the third aspect. This flowchart illustrates an exemplary concept of ambiguity subspace inference. It may be assumed that a trained neural network NN1 for the ambiguity subspace inference and a ML model NN2 for the downselection is used. However, a ML model NN2 may e.g. be replaced by a rule based PHY layer algorithm searching for the MPC triplets with a close match for the UL and DL frequency bands. In a first step the gNB may transmit (regularly) CSI RS so that the UE can estimate the profiled channel impulse responses of the radio channels. Then the UE may select a ML model NN1, which inherently is related to a specific set of ambiguity (e.g. hyper-) parameters like grid size, grid range, etc. In the so selected ML model NN1 the profiled channel impulse response is entered and at the output the inferred ambiguity subspace may be obtained, which may be a set of M MPC triplets. In one exemplary embodiment the UE may then report this ambiguity subspace to other entities for further processing (like positioning at the LMF). Otherwise, the UE may e.g. add a step of ambiguity subspace downselection, which can be another trained NN NN2 or a rule based PHY layer algorithm like a minimum mean square estimate of all possible MPC triplet combinations from UL and DL. The UE may again report this downselected ambiguity subspace, or, alternatively may directly derive parameters like the round trip time of the LOS MPC. And report then these parameters, e.g. to the LMF (e.g. over the gNB). The skilled person readily understands that the flow chart for UE and gNB may work (almost) the same with only minor modifications.

Fig. 25 is a flowchart showing an example embodiment of a method according to the second exemplary aspect and/or an example embodiment of a system according to the third aspect. This may be a flow chart or flow diagram for the generation of ML training data by an exhaustive search over the ambiguity subspace. The exhaustive search procedure may be done for a multitude of S channel realizations to obtain a set of S ambiguity subspaces. Each such subspace may contain a set of M MPC triplets together with the related profiled CIR. For the exhaustive search the algorithm may e.g. cycle through the K relevant MPC triplets, which can be generated for the given CIR profile and the given (e.g. hyper-) parameters like grid size, grid range, etc. For each of the K cycles the realization with the minimum NMSE (= minimum error reconstructed versus real profiled CIR) with respect to the MPC phases φ₂ and φ₃ may be stored e.g. into a memory together with the min NMSE value. These K min NMSE values may be used to identify the subset of M MPC triplets with an NMSE < Pₘᵢₙ + P_{TH}, which may be (then) stored into the memory for the ambiguity subspace together with the related profiled channel impulse response. Overall the ambiguity subspace for S different channel realizations may be stored. As a further (e.g. final) step each ambiguity subspace may be represented as an image of polygons (e.g. triangles) with the amplitudes (y-axis) and the delays (x-axis) of the (e.g. three) MPCs as the corner points. An extension from MPC triplets to ambiguity subspaces of four MPCs, may be made by allocating different colors to the triangles. For example, RGB colors, wherein the amplitude is allocated to the 'R'-value and the delays to the 'G'-value.

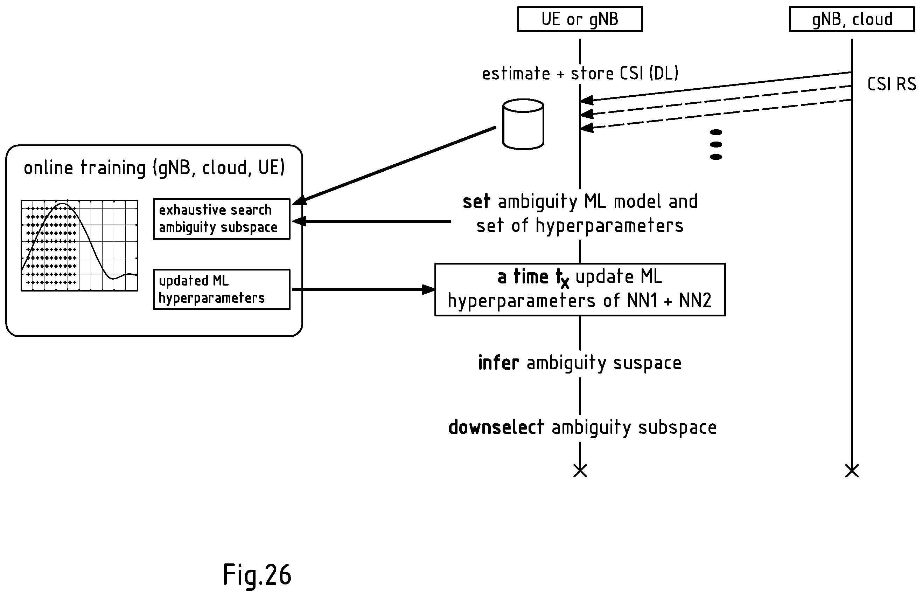

Fig. 26 is a flowchart showing an example embodiment of an apparatus according to the first aspect and/or an example embodiment of a method according to the second exemplary aspect and/or an example embodiment of a system according to the third aspect. ML models NN1 (and potentially also NN2) may e.g. be trained online to gradually adapt to the channel conditions of the environment. This online training may be run at the gNB, a cloud, or, as a backoffice task also at the UE side. For that purpose the exhaustive search as illustrated in Figure 25 may be done on a latest estimated (or from UE to gNB reported) CSI. After having collected a reasonable number of M ambiguity subspace realizations for the predefined set of ambiguity (e.g. hyper-) parameters the so far used - or any other suitable - ML model may be retrained for inference of the ambiguity subspace. At a time instant tₓ or alternatively when certain criteria are met like a minimum improvement of the ML model, then the ML NN1 and NN2 may be updated to the new set of ML model (e.g. hyper-) parameters. Then the ambiguity subspace inference and the downselection may be done based on the new NN models.

Fig. 27 is a flowchart showing an example embodiment of a method according to the second exemplary aspect and/or an example embodiment of a system according to the third aspect. This flowchart illustrated a combined downselection of ambiguity subspace over gNB and UE side, i.e. together by a gNB and a UE. At least a part of a first ambiguity subspace may be identified by the gNB and the gNB may perform a first downselecting of at least part of the identified subspace. The gNB may report the downselected subspace. A UE may receive at least a part of the downselected subspace. The UE may apply a second downselecting, i.e. a downselecting of at least a part of the downselected subspace, e.ge based on time domain evolution of e.g. CIR. The UE may transmit (e.g. report) at least a part of the further downselected subspace and/or transmit (e.g. report) an estimation of the (correct) set of MPC, e.g. to the gNB. The gNB may receive and use the further downselected subspace and/or the (e.g. report) an estimation of the (correct) set of MPC for e.g. positioning.

Fig. 29 is a flowchart showing an example embodiment of an apparatus according to the first aspect and/or an example embodiment of a method according to the second exemplary aspect and/or an example embodiment of a system according to the third aspect. A gNB or UE may comprise a generator network and/or a discriminator network.

Fig. 31 is a schematic block diagram of an apparatus 600 according to an exemplary aspect, which may for instance represent one of the apparatus 101, 102 of Fig. 1.

Apparatus 600 comprises a processor 601, program memory 602, working or main memory 603, data memory, communication interface(s) 604, and an optional user interface 605.

Apparatus 600 may for instance be configured to perform and/or control or comprise respective means (at least one of 601 to 605) for performing and/or controlling the method according to the first and/or second exemplary aspect. Apparatus 600 may as well constitute an apparatus comprising at least one processor (601) and at least one memory (602) including computer program code, the at least one memory and the computer program code configured to, with the at least one processor, cause an apparatus, e.g. apparatus 600 at least to perform and/or control the method according to all exemplary aspects.

Processor 601 may for instance further control the memories 602 to 603, the communication interface(s) 604, the optional user interface 605.

Processor 601 may for instance execute computer program code stored in program memory 602, which may for instance represent a computer readable storage medium comprising program code that, when executed by processor 601, causes the processor 601 to perform the method according to the second exemplary aspect.

Processor 601 (and also any other processor mentioned in this specification) may be a processor of any suitable type. Processor 601 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 601 may for instance be an application processor that runs an operating system.

Program memory 602 may also be included into processor 601. This memory may for instance be fixedly connected to processor 601, or be at least partially removable from processor 601, for instance in the form of a memory card or stick. Program memory 602 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 602 may also comprise an operating system for processor 601. Program memory 602 may also comprise a firmware for apparatus 600.

Apparatus 600 comprises a working memory 603, for instance in the form of a volatile memory. It may for instance be a Random Access Memory (RAM) or Dynamic RAM (DRAM), to give but a few non-limiting examples. It may for instance be used by processor 601 when executing an operating system and/or computer program.

Data memory may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory may for instance store one or more pieces of information, e.g. a measurement of a first signal, information on a first subspace, additional information.

Communication interface(s) 604 enable apparatus 600 to communicate with other entities, e.g. with apparatus 101 if the apparatus is a UE 102 of Fig. 1. The communication interface(s) 604 may for instance comprise a wireless interface, e.g. a cellular radio communication interface and/or a WLAN interface) and/or wire-bound interface, e.g. an IP-based interface, for instance to communicate with entities via the Internet. Communication interface(s) may enable apparatus 600 to communicate with other entities, for instance one or more entities as comprised by a mobile communication network

User interface 605 is optional and may comprise a display for displaying information to a user and/or an input device (e.g. a keyboard, keypad, touchpad, mouse, etc.) for receiving information from a user.

Some or all of the components of the apparatus 600 may for instance be connected via a bus. Some or all of the components of the apparatus 600 may for instance be combined into one or more modules.

The disclosed exemplary aspects may allow for a reduction of the first subspace, providing an accurate estimation of the real MPC parameters, especially in a case of relatively small delay differences between the multipath components of e.g. less than half a time delay tap. This may enable significant performance gains and enhances accuracy in applications such as positioning or channel reporting. An improved MPC parameter estimation accuracy can be directly transferred into corresponding position accuracy gains, or, an increased channel prediction horizon. Further, the estimation of the set of multipath components from the downselected subspace may enable to establish (partial or full) reciprocity between UL and DL channels. This may enable the possibility to track the radio channel in one band (e.g. UL) to infer the small scale evolution of the CSI in the other radio band (e.g., DL). This may enable avoiding the reference signal and reporting overhead from one of the two bands, at least for some time intervals.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' may be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A. Further, the term "comprising" may be limited to "consisting of", i.e. consisting of only the specified elements. The expression "A and/or B" may also be understood to mean "at least one of A or B".

It will be understood that all presented embodiments are only exemplary, and that any feature presented for a particular example embodiment may be used with any aspect on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The subject-matter has been described above by means of example embodiments. It should be noted that there are alternative ways and variations which are obvious to a skilled person in the art and can be implemented without deviating from the scope of the appended claims.

## Claims

1. An apparatus comprising means for:
- Obtaining a measurement of a channel impulse response on a first radio channel, wherein the first radio channel exhibits multipath propagation represented by a set of multipath components;
- Identifying at least a part of a first subspace of a plurality of sets of possible multipath components consistent with the channel impulse response as an identified first subspace, wherein a set of possible multipath components is consistent with a signal, if the set of possible multipath components results in a generated signal close to the measured channel impulse response with respect to a distance measure;
- Obtaining at least one additional information associated with the identified first subspace, wherein the additional information comprises other information on the first subspace than derivable from the measurement of the channel impulse response;
- Downselecting the identified first subspace based on the at least one additional information into a downselected subspace; and
- Identifying an estimation of the set of multipath components from the downselected subspace.

2. The apparatus according to claim 1 further comprising means for:
- Estimating a channel evolution of the first radio channel at least partially based on the estimation of the set of multipath components.

3. The apparatus according to claim 1 or 2 further comprising means for:
- Estimating a position of the apparatus at least partially based on the estimation of the set of multipath components.

4. The apparatus according to any of claims 1 to 3 further comprising means for:
- Receiving at least one measurement of at least one second signal on a second radio channel or on the first radio channel at a different time than the channel impulse response,
wherein the at least one second signal exhibits multipath propagation at least partially associated with the set of multipath components, and
wherein the at least one additional information is based on the at least one measurement of the at least one second signal.

5. The apparatus according to any of claims 1 to 4 further comprising means for:
- Identifying an estimation of the set of multipath components from the downselected subspace;
- Selecting a multipath component from the estimation of the set of multipath components having the highest signal strength of all multipath components in the estimation of the set of multipath components;
- Estimating a position of the apparatus at least partially based on the selected multipath component.

6. The apparatus according to any of claims 1 to 5, further comprising means for:
- Determining a time domain channel evolution of a first subset of the sets of possible multipath components and a time domain channel evolution of a second subset of the sets of possible multipath components,
wherein the downselecting comprises comparing the determined time domain channel evolutions.

7. The apparatus according to any of claims 1 to 6, wherein the downselecting comprises identifying at least one set of possible multipath components of the at least the part of the subspace at least partially based on a spatial domain solution.

8. The apparatus according to any of claims 1 to 7 further comprising means for:
- Identifying an estimation of an uncertainty of the set of multipath components based on the at least the part of the subspace;
- Skipping the step of downselecting if the estimation of the uncertainty is below a threshold value.

9. The apparatus according to any of claims 1 to 8, wherein the identifying the at least the part of the subspace is at least partially based on at least one of:
- an artificial intelligence and/or machine learning method;
- a profiling method.

10. The apparatus according to any of claims 1 to 9
wherein the at least one additional information comprises information on at least one marker subtap region enabling downselecting the identified subspace, wherein the marker subtap region is a known region with a markant change in the multipath components.

11. The apparatus according to any of claims 1 to 10
wherein the at least the part of the first subspace is limited to the N multipath components of the sets of possible multipath components consistent with the channel impulse response received within half a tap time delay around a time delay at which the highest signal strength of the channel impulse response is received.

12. A method, performed by an apparatus, comprising:
- Obtaining a measurement on a channel impulse response on a first radio channel, wherein the first radio channel exhibits multipath propagation resulting in a set of multipath components;
- Identifying at least a part of a first subspace of all sets of possible multipath components consistent with the channel impulse response as an identified first subspace, wherein a set of possible multipath components is consistent with a signal, if the set of possible multipath components results in a generated signal close to the measured channel impulse response with respect to a distance measure;
- Obtaining at least one additional information associated with the identified subspace, wherein the additional information comprises other information on the first subspace than derivable from the measurement of the channel impulse response;
- Downselecting the identified subspace based on the at least one additional information into a downselected subspace;
- Identifying an estimation of the set of multipath components from the downselected subspace.

13. The method according to claim 12 further comprising:
- Estimating the time evolution of the channel impulse response at least partially based on the estimation of the set of multipath components.

14. The method according to claim 12 or 13 further comprising:
- Estimating a position of the apparatus at least partially based on the estimation of the set of multipath components.

15. A computer program, the computer program when executed by a processor of an apparatus causing said apparatus to perform a method according to any of claims 12 to 14.

## Patentansprüche

1. Vorrichtung, umfassend Mittel zum:
Erhalten einer Messung einer Kanalimpulsantwort auf einem ersten Funkkanal, wobei der erste Funkkanal eine Mehrwegeausbreitung aufweist, die durch einen Satz von Mehrwegekomponenten repräsentiert wird;
- Identifizieren mindestens eines Teils eines ersten Unterraums einer Mehrzahl von Sätzen möglicher Mehrwegekomponenten, der mit der Kanalimpulsantwort konsistent ist, als identifizierten ersten Unterraum, wobei ein Satz möglicher Mehrwegekomponenten mit einem Signal konsistent ist, wenn der Satz möglicher Mehrwegekomponenten in einem generierten Signal, das in Bezug auf ein Abstandsmaß nahe an der gemessenen Kanalimpulsantwort liegt, resultiert;
- Erhalten mindestens einer zusätzlichen Information, die mit dem identifizierten ersten Unterraum assoziiert ist, wobei die zusätzliche Information andere Informationen über den ersten Unterraum umfasst als aus der Messung der Kanalimpulsantwort ableitbar;
- Herunterselektieren des identifizierten ersten Unterraums basierend auf der mindestens einen zusätzlichen Information in einen herunterselektierten Unterraum; und
- Identifizieren einer Schätzung des Satzes von Mehrwegekomponenten aus dem herunterselektierten Unterraum.

2. Vorrichtung nach Anspruch 1, ferner umfassend Mittel zum:
- Schätzen einer Kanalentwicklung des ersten Funkkanals zumindest teilweise basierend auf der Schätzung des Satzes von Mehrwegekomponenten.

3. Vorrichtung nach Anspruch 1 oder 2, ferner umfassend Mittel zum:
- Schätzen einer Position der Vorrichtung zumindest teilweise basierend auf der Schätzung des Satzes von Mehrwegekomponenten.

4. Vorrichtung nach einem der Ansprüche 1 bis 3, ferner umfassend Mittel zum:
- Empfangen mindestens einer Messung mindestens eines zweiten Signals auf einem zweiten Funkkanal oder auf dem ersten Funkkanal zu einem anderen Zeitpunkt als die Kanalimpulsantwort,
wobei das mindestens eine zweite Signal eine Mehrwegeausbreitung aufweist, die zumindest teilweise mit dem Satz von Mehrwegekomponenten assoziiert ist, und
wobei die mindestens eine zusätzliche Information auf der mindestens einen Messung des mindestens einen zweiten Signals basiert.

5. Vorrichtung nach einem der Ansprüche 1 bis 4, ferner umfassend Mittel zum:
- Identifizieren einer Schätzung des Satzes von Mehrwegekomponenten aus dem herunterselektierten Unterraum;
- Auswählen einer Mehrwegekomponente aus der Schätzung des Satzes von Mehrwegekomponenten, die die höchste Signalstärke aller Mehrwegekomponenten in der Schätzung des Satzes von Mehrwegekomponenten aufweist;
- Schätzen einer Position der Vorrichtung zumindest teilweise basierend auf der ausgewählten Mehrwegekomponente.

6. Vorrichtung nach einem der Ansprüche 1 bis 5, ferner umfassend Mittel zum:
- Bestimmen einer Zeitbereichs-Kanalentwicklung eines ersten Teilsatzes der Sätze möglicher Mehrwegekomponenten und einer Zeitbereichs-Kanalentwicklung eines zweiten Teilsatzes der Sätze möglicher Mehrwegekomponenten,
wobei das Herunterselektieren ein Vergleichen der bestimmten Zeitbereichs-Kanalentwicklungen umfasst.

7. Vorrichtung nach einem der Ansprüche 1 bis 6, wobei das Herunterselektieren ein Identifizieren mindestens eines Satzes möglicher Mehrwegekomponenten des zumindest einen Teils des Unterraums zumindest teilweise basierend auf einer Raumbereichslösung umfasst.

8. Vorrichtung nach einem der Ansprüche 1 bis 7, ferner umfassend Mittel zum:
- Identifizieren einer Schätzung einer Unsicherheit des Satzes von Mehrwegekomponenten basierend auf zumindest eines Teils des Unterraums;
- Überspringen des Schritts des Herunterselektierens, wenn die Schätzung der Unsicherheit unter einem Schwellenwert liegt.

9. Vorrichtung nach einem der Ansprüche 1 bis 8, wobei das Identifizieren des zumindest einen Teils des Unterraums zumindest teilweise basierend auf mindestens einem der Folgenden:
- einem Verfahren der künstlichen Intelligenz und/oder des maschinellen Lernens;
- einem Profilierungsverfahren.

10. Vorrichtung nach einem der Ansprüche 1 bis 9,
wobei die mindestens eine zusätzliche Information eine Information über mindestens eine Markierungs-Subtap-Region umfasst, die ein Herunterselektieren des identifizierten Unterraums ermöglicht, wobei die Markierungs-Subtap-Region eine bekannte Region mit einer markanten Änderung in den Mehrwegekomponenten ist.

11. Vorrichtung nach einem der Ansprüche 1 bis 10,
wobei der zumindest eine Teil des ersten Unterraums auf die N Mehrwegekomponenten der Sätze möglicher Mehrwegekomponenten beschränkt ist, die mit der Kanalimpulsantwort konsistent sind, die innerhalb einer halben Tap-Zeitverzögerung um eine Zeitverzögerung herum empfangen wird, bei der die höchste Signalstärke der Kanalimpulsantwort empfangen wird.

12. Verfahren, ausgeführt durch eine Vorrichtung, umfassend:
- Erhalten einer Messung über eine Kanalimpulsantwort auf einem ersten Funkkanal, wobei der erste Funkkanal eine Mehrwegeausbreitung aufweist, die in einem Satz von Mehrwegekomponenten resultiert;
- Identifizieren mindestens eines Teils eines ersten Unterraums aller Sätze möglicher Mehrwegekomponenten, der mit der Kanalimpulsantwort konsistent ist, als identifizierten ersten Unterraum, wobei ein Satz möglicher Mehrwegekomponenten mit einem Signal konsistent ist, wenn der Satz möglicher Mehrwegekomponenten in einem erzeugten Signal, das in Bezug auf ein Abstandsmaß nahe an der gemessenen Kanalimpulsantwort liegt, resultiert;
- Erhalten mindestens einer zusätzlichen Information, die mit dem identifizierten Unterraum assoziiert ist, wobei die zusätzliche Information andere Informationen über den ersten Unterraum umfasst als aus der Messung der Kanalimpulsantwort ableitbar;
- Herunterselektieren des identifizierten Unterraums basierend auf der mindestens einen zusätzlichen Information in einen herunterselektierten Unterraum;
- Identifizieren einer Schätzung des Satzes von Mehrwegekomponenten aus dem herunterselektierten Unterraum.

13. Verfahren nach Anspruch 12, ferner umfassend:
- Schätzen der Zeitentwicklung der Kanalimpulsantwort zumindest teilweise basierend auf der Schätzung des Satzes von Mehrwegekomponenten.

14. Verfahren nach Anspruch 12 oder 13, ferner umfassend:
- Schätzen einer Position der Vorrichtung zumindest teilweise basierend auf der Schätzung des Satzes von Mehrwegekomponenten.

15. Computerprogramm, wobei das Computerprogramm, wenn es von einem Prozessor einer Vorrichtung ausgeführt wird, die genannte Vorrichtung veranlasst, ein Verfahren nach einem der Ansprüche 12 bis 14 auszuführen.

## Revendications

1. Un appareil comprenant des moyens pour :
- Obtenir une mesure d'une réponse impulsionnelle de canal sur un premier canal radio, dans lequel le premier canal radio présente une propagation par trajets multiples représentée par un ensemble de composantes à trajets multiples ;
- Identifier au moins une partie d'un premier sous-espace d'une pluralité d'ensembles de composantes à trajets multiples possibles cohérent avec la réponse impulsionnelle de canal en tant que premier sous-espace identifié, dans lequel un ensemble de composantes à trajets multiples possibles est cohérent avec un signal, si l'ensemble de composantes à trajets multiples possibles aboutit à un signal généré proche de la réponse impulsionnelle de canal mesurée par rapport à une mesure de distance ;
- Obtenir au moins une information supplémentaire associée au premier sous-espace identifié, dans lequel l'information supplémentaire comprend d'autres informations sur le premier sous-espace que celles pouvant être déduites de la mesure de la réponse impulsionnelle de canal ;
- Sous-sélectionner le premier sous-espace identifié sur la base de l'au moins une information supplémentaire en un sous-espace sous-sélectionné ; et
- Identifier une estimation de l'ensemble de composantes à trajets multiples à partir du sous-espace sous-sélectionné.

2. L'appareil selon la revendication 1, comprenant en outre des moyens pour :
- Estimer une évolution de canal du premier canal radio au moins partiellement sur la base de l'estimation de l'ensemble de composantes à trajets multiples.

3. L'appareil selon la revendication 1 ou 2, comprenant en outre des moyens pour :
- Estimer une position de l'appareil au moins partiellement sur la base de l'estimation de l'ensemble de composantes à trajets multiples.

4. L'appareil selon l'une quelconque des revendications 1 à 3, comprenant en outre des moyens pour :
- Recevoir au moins une mesure d'au moins un deuxième signal sur un deuxième canal radio ou sur le premier canal radio à un instant différent de la réponse impulsionnelle de canal,
dans lequel l'au moins un deuxième signal présente une propagation par trajets multiples au moins partiellement associée à l'ensemble de composantes à trajets multiples, et
dans lequel l'au moins une information supplémentaire est basée sur l'au moins une mesure de l'au moins un deuxième signal.

5. L'appareil selon l'une quelconque des revendications 1 à 4, comprenant en outre des moyens pour :
- Identifier une estimation de l'ensemble de composantes à trajets multiples à partir du sous-espace sous-sélectionné ;
- Sélectionner une composante à trajets multiples parmi l'estimation de l'ensemble de composantes à trajets multiples ayant la plus forte intensité de signal parmi toutes les composantes à trajets multiples dans l'estimation de l'ensemble de composantes à trajets multiples ;
- Estimer une position de l'appareil au moins partiellement sur la base de la composante à trajets multiples sélectionnée.

6. L'appareil selon l'une quelconque des revendications 1 à 5, comprenant en outre des moyens pour :
- Déterminer une évolution de canal dans le domaine temporel d'un premier sous-ensemble des ensembles de composantes à trajets multiples possibles et une évolution de canal dans le domaine temporel d'un deuxième sous-ensemble des ensembles de composantes à trajets multiples possibles,
dans lequel la sous-sélection comprend la comparaison des évolutions de canal dans le domaine temporel déterminées.

7. L'appareil selon l'une quelconque des revendications 1 à 6, dans lequel la sous-sélection comprend l'identification d'au moins un ensemble de composantes à trajets multiples possibles de l'au moins la partie du sous-espace au moins partiellement sur la base d'une solution du domaine spatial.

8. L'appareil selon l'une quelconque des revendications 1 à 7, comprenant en outre des moyens pour :
- Identifier une estimation d'une incertitude de l'ensemble de composantes à trajets multiples sur la base de l'au moins la partie du sous-espace ;
- Omettre l'étape de sous-sélection si l'estimation de l'incertitude est inférieure à une valeur de seuil.

9. L'appareil selon l'une quelconque des revendications 1 à 8, dans lequel l'identification de l'au moins la partie du sous-espace est au moins partiellement basée sur au moins l'un parmi :
- une méthode d'intelligence artificielle et/ou d'apprentissage automatique ;
- une méthode de profilage.

10. L'appareil selon l'une quelconque des revendications 1 à 9, dans lequel l'au moins une information supplémentaire comprend une information sur au moins une région de sous-tap marqueur permettant de sous-sélectionner le sous-espace identifié, dans lequel la région de sous-tap marqueur est une région connue présentant un changement marquant dans les composantes à trajets multiples.

11. L'appareil selon l'une quelconque des revendications 1 à 10, dans lequel l'au moins la partie du premier sous-espace est limitée aux N composantes à trajets multiples des ensembles de composantes à trajets multiples possibles cohérentes avec la réponse impulsionnelle de canal reçue dans un demi-tap de retard temporel autour d'un retard temporel auquel la plus forte intensité de signal de la réponse impulsionnelle de canal est reçue.

12. Un procédé, réalisé par un appareil, comprenant :
- Obtenir une mesure sur une réponse impulsionnelle de canal sur un premier canal radio, dans lequel le premier canal radio présente une propagation par trajets multiples aboutissant à un ensemble de composantes à trajets multiples ;
- Identifier au moins une partie d'un premier sous-espace de tous les ensembles de composantes à trajets multiples possibles cohérent avec la réponse impulsionnelle de canal en tant que premier sous-espace identifié, dans lequel un ensemble de composantes à trajets multiples possibles est cohérent avec un signal, si l'ensemble de composantes à trajets multiples possibles aboutit à un signal généré proche de la réponse impulsionnelle de canal mesurée par rapport à une mesure de distance ;
- Obtenir au moins une information supplémentaire associée au sous-espace identifié, dans lequel l'information supplémentaire comprend d'autres informations sur le premier sous-espace que celles pouvant être déduites de la mesure de la réponse impulsionnelle de canal ;
- Sous-sélectionner le sous-espace identifié sur la base de l'au moins une information supplémentaire en un sous-espace sous-sélectionné ;
- Identifier une estimation de l'ensemble de composantes à trajets multiples à partir du sous-espace sous-sélectionné.

13. Le procédé selon la revendication 12, comprenant en outre :
- Estimer l'évolution temporelle de la réponse impulsionnelle de canal au moins partiellement sur la base de l'estimation de l'ensemble de composantes à trajets multiples.

14. Le procédé selon la revendication 12 ou 13, comprenant en outre :
- Estimer une position de l'appareil au moins partiellement sur la base de l'estimation de l'ensemble de composantes à trajets multiples.

15. Un programme d'ordinateur, le programme d'ordinateur, lorsqu'il est exécuté par un processeur d'un appareil, amenant ledit appareil à réaliser un procédé selon l'une quelconque des revendications 12 à 14.
